(19) Europäisches Patentamt
European Patent Office
Office européen des brevets

(11) EP 4 108 720 B1

(12) # EUROPEAN PATENT SPECIFICATION

(45) Date of publication and mention of the grant of the patent:
**18.12.2024 Bulletin 2024/51**

(21) Application number: **21879779.3**

(22) Date of filing: **06.09.2021**

(51) International Patent Classification (IPC):
***C08L 21/00** (2006.01)* ***C08K 3/04** (2006.01)*
***C08K 3/36** (2006.01)* ***B60C 11/03** (2006.01)*

(52) Cooperative Patent Classification (CPC):
(C-Sets available)
**B60C 11/005; B60C 11/0075; B60C 11/0306; C08K 3/04; C08K 3/36; C08L 15/00;**
B60C 2011/0025; B60C 2011/0033; B60C 2011/0355; B60C 2011/1254; Y02T 10/86

(Cont.)

(86) International application number:
**PCT/JP2021/032672**

(87) International publication number:
**WO 2022/080037 (21.04.2022 Gazette 2022/16)**

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2020 JP 2020173414**

(43) Date of publication of application:
**28.12.2022 Bulletin 2022/52**

(73) Proprietor: **Sumitomo Rubber Industries, Ltd.**
**Kobe-shi, Hyogo 651-0072 (JP)**

(72) Inventor: **HAMAMURA, Kenji**
**Kobe-shi, Hyogo 651-0072 (JP)**

(74) Representative: **TBK**
**Bavariaring 4-6**
**80336 München (DE)**

(56) References cited:
**EP-A1- 2 154 006**
**EP-A1- 2 610 077**
**EP-A2- 2 799 247**
**WO-A1-2015/170615**
**JP-A- 2002 503 177**
**JP-A- 2011 213 988**
**JP-A- 2012 036 370**
**JP-A- 2012 148 651**
**JP-A- S6 349 505**
**JP-B1- 6 863 504**
**US-A1- 2013 248 075**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 15/00, C08L 7/00, C08L 91/00, C08L 9/00, C08L 25/16, C08K 3/04, C08K 3/36, C08K 5/548, C08K 3/22, C08K 5/09, C08K 3/06, C08K 5/47, C08K 5/31;**
**C08L 15/00, C08L 91/00, C08L 9/00, C08L 25/16, C08K 3/04, C08K 3/36, C08K 5/548, C08K 3/22, C08K 5/09, C08K 3/06, C08K 5/47, C08K 5/31**

## Description

TECHNICAL FIELD

The present disclosure relates to a tire.

BACKGROUND ART

With a pneumatic tire, the realization of a light weight is being called for from the viewpoint of improving fuel efficiency. Patent Document 1 discloses a predetermined tire having a reduced rubber volume to realize a light weight.

PRIOR ART DOCUMENT

Patent Document

Patent Document 1: JP 2017-043281 A

SUMMARY OF THE INVENTION

PROBLEM TO BE SOLVED BY THE INVENTION

However, with a light-weight tire having a reduced rubber volume, there is room for improvement with respect to wet grip performance.

An object of the present disclosure is to provide a tire having an improved wet grip performance.

MEANS TO SOLVE THE PROBLEM

As a result of intensive studies, it was found that a tire having an improved wet grip performance could be obtained by making a tire weight with respect to the maximum load capability of the tire, tan δ and complex modulus of a rubber composition constituting a tread, and the tan δ with respect to the tire weight to be within predetermined ranges.

In other words, the present disclosure relates to a tire comprising a tread part, wherein a ratio ($G/W_L$) of a tire weight G (kg) with respect to a maximum load capability $W_L$ (kg) of the tire is 0.0131 or less, wherein the tread comprises at least one rubber layer composed of a rubber composition comprising a rubber component and a reinforcing filler, tan δ at 30°C (30°C tan δ) of the rubber composition is over 0.15, and complex modulus at 30°C ($E^*_{30}$) of the rubber composition is less than 8.0 MPa, and wherein a ratio (30°C tan δ/G) of the 30°C tan δ with respect to the G is 0.016 or more.

EFFECTS OF THE INVENTION

According to the present disclosure, a tire having an improved wet grip performance is provided.

BRIEF DESCRIPTION OF THE DRAWINGS

FIG. 1 is an enlarged cross-sectional view schematically showing a part of a tread of a tire.
FIG. 2 is a schematic view of a ground contact surface of the tire when the tread is pressed against a flat surface.
FIG. 3 is a view showing a tire cross-sectional width G, a tire cross-sectional height Ht, and a tire outer diameter Dt of a cross section of the tire.

EMBODIMENT FOR CARRYING OUT THE INVENTION

A tire being one embodiment of the present disclosure is a tire comprising a tread, wherein a ratio ($G/W_L$) of a tire weight G (kg) with respect to a maximum load capability $W_L$ (kg) of the tire is 0.0131 or less, the tread has at least one rubber layer composed of a rubber composition comprising a rubber component and a reinforcing filler, tan δ at 30°C of the rubber composition is over 0.15, and complex modulus at 30°C ($E^*_{30}$) is less than 8.0 MPa, and a ratio (30°C tan δ/G) of the 30°C tan δ with respect to the G is 0.016 or more.

Tan δ at 30°C of the rubber composition and complex modulus at 30°C ($E^*_{30}$) of the rubber composition satisfying the above-described requirements makes it possible for the obtained tire to improve in wet grip performance. Although

it is not intended to be bound by theory with respect to the reason therefor, it can be considered as follows:
It is difficult for the tire having a light weight with respect to the maximum load capability to alleviate input from a road surface, so that the tire is easy to oscillate and tends to have a high oscillation frequency. Then, making tan δ at 30°C of a tread rubber greater than a predetermined value in accordance with the tire weight makes it easy to convert high-frequency oscillation to thermal energy, so that heat dissipation of the tread rubber is promoted, making it possible to improve wet grip performance. Furthermore, it is considered that making complex modulus ($E^*_{30}$) of the tread rubber less than a predetermined value makes it easier to convert oscillation energy to thermal energy, making it possible to further increase the effect of improving wet grip performance.

The ratio (30°C tan δ/G) of 30°C tan δ with respect to the G is 0.016 or more, preferably 0.017 or more, more preferably 0.018 or more, further preferably 0.019 or more, and particularly preferably 0.020 or more. Moreover, while an upper limit of 30°C tan δ/G is not particularly limited from the viewpoint of the effect of the present disclosure, it is preferably 0.080 or less, more preferably 0.070 or less, further preferably 0.060 or less, and particularly preferably 0.050 or less.

Besides, in the specification, the maximum load capability $W_L$ (kg) indicates a load capability value (kg) when a maximum air pressure (kPa) is filled, which maximum air pressure (kPa) corresponds to a tire having, under the use conditions defined in the JATMA standard, a load index (LI) thereof. Besides, in a case of a tire having a size not specified in the JATMA standard, it is to be a value calculated using the below-described Equations (1) and (2), where Wt (mm) is a tire cross-sectional width, Ht (mm) is a tire cross-sectional height, and Dt (mm) is a tire outer diameter when the tire is filled with air at 250 kPa. Besides, Wt is a maximum width between side wall outer surfaces in the normal state, with any patterns or letters on a tire side surface being excluded. Ht is the distance from a bead part bottom surface to a tread uppermost surface and is 1/2 the difference between the outer diameter and the port rim diameter of the tire.

$$V = \{(Dt/2)^2-(Dt/2-Ht)^2\}\times\pi\times Wt \cdot\cdot\cdot (1)$$

$$W_L = 0.000011\times V+100 \cdot\cdot\cdot (2)$$

Preferably, the reinforcing filler comprises silica, and a ratio of a content of carbon black with respect to a content of silica in the reinforcing filler is 0.21 or less.

The rubber composition preferably comprises 4.0 parts by mass or more of a resin component based on 100 parts by mass of the rubber component.

The specific gravity of the rubber composition is preferably 1.270 or less.

Preferably, the tread part has a land part being partitioned by two or more circumferential grooves extending continuously in the tire circumferential direction, and, when H is a distance between an extension line of the land part and an extension line of the deepest part of the groove bottom of a circumferential groove, a rubber layer composed of the rubber composition is arranged in at least a part of a region having a distance H from the uppermost surface to the inner side in the radial direction of the land part.

$H/E^*_{30}$ is preferably 1.33 or less, more preferably 1.30 or less, further preferably 1.27 or less, further preferably 1.25 or less, further preferably 1.22 or less, and particularly preferably 1.20 or less. The tire of the present disclosure has a light weight and has a small complex modulus, so that there is a concern for a decrease in steering stability performance. Thus, steering stability performance can be improved by decreasing the depth of the circumferential groove in accordance with complex modulus. Besides, while a lower limit of $H/E^*_{30}$ is not particularly limited from the viewpoint of the effect of the present disclosure, it is preferably 0.70 or more, more preferably 0.75 or more, further preferably 0.80 or more, and particularly preferably 0.85 or more.

Preferably, the tread part has a pair of shoulder land parts partitioned by the circumferential groove, and center land parts located between the pair of shoulder land parts, and a ratio of a total center land part area with respect to a total land part area is 0.35 to 0.80.

Preferably, the tread part has two or more circumferential grooves extending continuously in the tire circumferential direction, a width direction groove, and a sipe, and a ratio of a total groove area with respect to a ground contact area of the tread part is 0.15 to 0.35.

A ratio of a total circumferential groove area with respect to the ground contact area of the tread part is preferably 0.09 to 0.16, and the ratio of a total area of the width direction groove and the sipe with respect to the ground contact area of the tread part is preferably 0.08 to 0.14.

A ratio La/Lb of a length La of the tire in the circumferential direction and a total sum Lb of a total Lb1 of width direction edge component lengths of width direction grooves and a total Lb2 of width direction edge component lengths of sipes is preferably 0.10 to 0.20.

The tread part preferably has the sipe, both ends of which sipe are not being opened to the circumferential

grooves.

Preferably, the tread part comprises a first rubber layer constituting a tread surface and a second rubber layer being arranged adjacent on the inner side of the first layer in the radial direction, and at least one of the first rubber layer and the second rubber layer is composed of the rubber composition, and, more preferably, the first rubber layer is composed of the rubber composition.

The deepest part of the groove bottom of a circumferential groove is preferably formed to be located on the inner side of the outermost part of the second rubber layer in the tire radial direction.

A proportion (t2/t1) of a thickness t2 of the second rubber layer with respect to a thickness t1 of the first rubber layer is 5/95 to 60/40.

In the specification, "the tire weight" is expressed in G (kg). Note that G is the weight of a standalone tire unit not including the weight of the rim. Moreover, in a case that a noise damping material, a sealant, a sensor, and the like are mounted to a tire inner cavity part, G is a value including the weights thereof. Besides, the tire weight G can be changed by a normal method, or, in other words, it can be increased by increasing the specific gravity of the tire or the thickness of each member of the tire, or can be decreased by the converse thereof.

From the viewpoint of the effect of the present disclosure, with the tire according to the present disclosure, the ratio ($G/W_L$) of the tire weight G (kg) with respect to the maximum load capability $W_L$ (kg) is 0.0131 or less, more preferably 0.0130 or less, further preferably 0.0129 or less, further preferably 0.0128 or less, and particularly preferably 0.0127 or less. Moreover, while a lower limit of the $G/W_L$ is not particularly limited from the viewpoint of the effect of the present disclosure, it can be 0.0080 or more, 0.0090 or more, 0.0100 or more, 0.0110 or more, 0.0115 or more, 0.0120 or more, or 0.0121 or more, for example.

From the viewpoint of better exhibiting the effect of the present disclosure, the maximum load capability $W_L$ (kg) is preferably 300 or more, more preferably 400 or more, further preferably 450 or more, and particularly preferably 500 or more. Moreover, from the viewpoint of better exhibiting the effect of the present disclosure, the maximum load capability $W_L$ (kg) can be, for example, 1,300 or less, 1,200 or less, 1,100 or less, 1,000 or less, 900 or less, 800 or less, 700 or less, or 650 or less. Besides, the maximum load capability $W_L$ can be increased by increasing the virtual volume V of the space occupied by the tire, or can be decreased by the converse thereof.

A "normal rim" is a rim defined, in a standard system including a standard on which the tire is based, for each tire by the standard, and is a "standard rim" for JATMA, a "Design Rim" for TRA, and a "Measuring Rim" for ETRTO. Besides, in a case of a tire having a size not specified in the standard system, it is to refer to what can be rim-assembled to the tire and has the least width of minimum diameter rims, causing no air leakage between the rim and the tire.

A "normal internal pressure" is an air pressure defined for each tire by each standard, in a standard system including a standard on which the tire is based, and is "a maximum air pressure" for JATMA, a maximum value described in the table "TIRE LOAD LIMITS AT VARIOUS COLD INFLATION PRESSURES" for TRA, or "INFLATION PRESSURE" for ETRTO. Besides, in a case of a tire having a size not specified in the standard system, the normal internal pressure is to be 250 kPa.

"The normal state" is a state in which a tire is rim-assembled to the normal rim and filled with a normal internal pressure, and is, even more, a non-load state. Besides, in a case of a tire having a size not specified in the standard system, it is to refer to a state in which the above-mentioned tire is rim-assembled to the minimum rim and filled with 250 kPa, and is, even more, a non-load state.

FIG. 1 is an enlarged cross-sectional view schematically showing a part of a tread of a tire. In FIG. 1, the up-down direction is the tire radial direction, the left-right direction is the tire width direction, and the direction perpendicular to the paper surface is the tire circumferential direction. Besides, in the present disclosure, unless otherwise specified, dimensions of each part of the tire have values measured in the normal state.

A groove depth H of a circumferential groove 1 is determined by the distance between an extension line 4 of a land part 2 and an extension line 5 of the deepest part of the groove bottom of the circumferential groove 1. Besides, in a case that the circumferential groove 1 is in a plurality, for example, the groove depth H can be made to be the distance between the extension line 4 of the land part 2 and the extension line 5 of the deepest part of the groove bottom of the circumferential groove 1 having the greatest groove depth (the left circumferential groove 1 in FIG. 1) of the plurality of circumferential grooves 1. Preferably, with the tire of the present disclosure, a rubber layer composed of the above-described predetermined rubber composition is arranged in at least a part of a region having a distance H from the uppermost surface (a tread surface 3) of the land part 2 to the inner side in the tire radial direction. Moreover, with the tire of the present disclosure, preferably, there are two or more rubber layers present in the region having the distance H from the uppermost surface of the land part 2 to the inner side in the tire radial direction and at least one rubber layer of the two or more rubber layers is composed of a predetermined rubber composition. In a case that the rubber layer is composed of two or more layers, at least one of the two or more rubber layers can be composed of the above-mentioned predetermined rubber composition.

A tread part of the tire of the present disclosure comprises a first rubber layer 6 and a second rubber layer 7 (below may be merely represented as "a first layer 6" and "a second layer 7"), an outer surface of the first layer 6

constituting the tread surface 3 and the second layer 7 being arranged adjacent on the inner side of the first layer 6 in the radial direction. The first layer 6 typically corresponds to a cap tread. The second layer 7 typically corresponds to a base tread or an under tread. Moreover, as long as the object of the present disclosure is achieved, it can further have one or a plurality of rubber layers between the second layer 7 and a belt layer. With the tire of the present disclosure, at least one of the first layer 6 and the second layer 7 is preferably composed of a predetermined rubber composition and the first layer 6 is more preferably composed of a predetermined rubber composition.

The one circumferential groove 1 shown on the left in FIG. 1 has the deepest part of the groove bottom of the circumferential groove 1 being formed so as to be located on the inner side of the outermost part of the second layer 7 in the tire radial direction. Specifically, the second layer 7 has a recessed part being recessed on the inner side of the outermost part thereof in the tire radial direction and a part of the first layer 6 is formed in the recessed part of the second layer 7 with a predetermined thickness. The circumferential groove 1 is formed so as to get to the inner side of the recessed part of the second layer 7 beyond the outer surface of the second layer 7. Besides, as the circumferential groove 1 shown on the right in FIG. 1, the circumferential groove 1 can be formed with a groove depth not reaching the outer surface of the second layer 7.

In FIG. 1, a two-way arrow t1 is the thickness of the first layer 6, while a two-way arrow t2 is the thickness of the second layer 7. In FIG. 1, a midpoint of the land part 2 in the tire width direction is shown as a symbol P. A straight line shown with a symbol N passes through a point P and is a straight perpendicular line (a normal line) with respect to a contact plane of this point P. In the specification, thicknesses t1 and t2 are measured along a normal line N being drawn from the point P on the tread surface at a position at which a groove is not present in a cross section of FIG. 1.

In the present disclosure, the thickness t1 of the first layer 6 is not particularly limited, and is preferably 1.0 mm or more, more preferably 2.0 mm or more, and further preferably 3.0 mm or more. Moreover, the thickness t1 of the first layer 6 is preferably 10.0 mm or less, more preferably 9.0 mm or less, and further preferably 8.0 mm or less.

In the present disclosure, the thickness t2 of the second layer 7 is not particularly limited, and is preferably 0.5 mm or more, more preferably 1.0 mm or more, and further preferably 1.5 mm or more. Moreover, the thickness t2 of the second layer 7 is preferably 8.0 mm or less, more preferably 6.0 mm or less, and further preferably 4.0 mm or less.

From the viewpoint of preventing a tire blowout and maintaining wet grip performance, a ratio of t2 and t1 (t2/t1) is preferably 5/95 or more, more preferably 8/92 or more, further preferably 10/90 or more, further preferably 12/88 or more, further preferably 15/85 or more, further preferably 20/80 or more, and particularly preferably 25/75 or more. Moreover, from the viewpoint of wet grip, it is preferably 60/40 or less, more preferably 55/45 or less, further preferably 50/50 or less, and particularly preferably 40/60 or less.

FIG. 2 shows a schematic view of a ground contact surface when the tread is pressed against a flat surface. As shown in FIG. 1, a tread 10 constituting the tire according to the present disclosure has the circumferential groove 1 extending continuously in a tire circumferential direction C (extending linearly along the tire circumferential direction in the example in FIG. 1), and a lateral groove 21 and sipes 22, 23 extending in the width direction.

The tread part 10 has the circumferential groove 1 in a plurality, which circumferential groove 1 extends continuously in the circumferential direction C. While three of the circumferential grooves 1 are provided in FIG. 1, the number of circumferential grooves is not particularly limited, so that it may be two to five, for example. Moreover, in the present disclosure, the circumferential groove 1 extends linearly along the circumferential direction, but is not limited to such an aspect, and, for example, may extend in a wavy, sinusoidal, or zigzag shape along the circumferential direction.

The tread part 10 has the land part 2 being partitioned by the plurality of circumferential grooves 1 in a tire width direction W. Shoulder land parts 11 are a pair of land parts formed between the circumferential groove 1 and a tread end Te. A center land part 12 is a land part formed between a pair of shoulder land parts 11. While two center land parts 12 are provided in FIG. 1, the number of center land parts is not particularly limited, and can be one to five, for example.

The land part 2 is preferably provided with a lateral groove and/or sipe traversing the land part 2. Moreover, the land part 2 more preferably has the sipe, both ends or one end of which sipe is not being opened to the circumferential groove 1. In FIG. 2, the shoulder land part 11 is provided with the lateral shoulder groove 21 in a plurality, a terminal of which lateral shoulder groove 21 is opened to the circumferential groove 1, and the shoulder sipe 22 in a plurality, both ends of which shoulder sipe 22 are not opened to the circumferential groove 1, and the center land part 12 is provided with the shoulder sipe 23 in a plurality, both ends of which shoulder sipe 23 are not opened to the circumferential groove 1, but it is not limited to such aspects.

Besides, in the present disclosure, a "groove" including the circumferential groove and the lateral groove refers to a recess having a width greater than at least 2.0 mm. On the other hand, in the specification, a "sipe" refers to a narrow notch having a width of 2.0 mm or less, preferably 0.5 to 2.0 mm.

In the present disclosure, where La is a length of the tire in the circumferential direction C and Lb is a total sum of a total Lb1 of width direction W edge component lengths of the width direction grooves 21 and a total Lb2 of width direction W edge component lengths of the sipes 22, 23, La/Lb is preferably 0.10 or more, preferably 0.11 or more, further preferably 0.12 or more, and particularly preferably 0.13 or more. Moreover, La/Lb is preferably 0.20 or less,

preferably 0.19 or less, further preferably 0.18 or less, and particularly preferably 0.17 or less. La/Lb being made to be within the above-mentioned range allows deformation of the tread part 10 to be within a predetermined range, making it possible to secure at least a predetermined area of the land part 2 and to improve steering stability at the time of high-speed traveling when the below-described rubber composition is used for the tread.

Besides, the "lengths of width direction W edge components" of the width direction groove 21 and the sipes 22, 23 refer to lengths of width direction W projections (the width direction component of the width direction component and the circumferential direction component) of the width direction groove 21 and the sipes 22, 23.

The ratio of the total center land part 12 area with respect to the total land part 2 area is preferably 0.35 or more, more preferably 0.40 or more, and further preferably 0.45 or more. The ratio of the total center land part 12 area with respect to the total land part 2 area being made to be within the above-described range makes it possible to increase the volume of the center land part and to increase the land part rigidity, making it possible to achieve better steering stability. Moreover, from the viewpoint of the effect of the present disclosure, the ratio of the total center land part 12 area with respect to the total land part 2 area is preferably 0.80 or less, more preferably 0.70 or less, further preferably 0.60 or less, and particularly preferably 0.55 or less.

The ratio of the total groove area with respect to the ground contact area of the tread part 10 is preferably 0.15 or more, more preferably 0.17 or more, and further preferably 0.20 or more. Moreover, the ratio of the total groove area with respect to the ground contact area of the tread part 10 is preferably 0.35 or less, more preferably 0.32 or less, and further preferably 0.30 or less.

The ratio of the total circumferential groove 1 area with respect to the ground contact area of the tread part 10 is preferably 0.09 or more, more preferably 0.10 or more, and further preferably 0.11 or more. Moreover, the ratio of the total circumferential groove 1 area with respect to the ground contact area of the tread part 10 is preferably 0.16 or less, more preferably 0.15 or less, and further preferably 0.14 or less.

The ratio of the total area of the width direction groove 21 and the sipes 22, 23 with respect to the ground contact area of the tread part 10 is preferably 0.08 or more, more preferably 0.09 or more, and further preferably 0.10 or more. Moreover, the ratio of the total area of the width direction groove 21 and the sipes 22, 23 with respect to the ground contact area of the tread part 10 is preferably 0.14 or less, more preferably 0.13 or less, and further preferably 0.12 or less.

Proportions of the total groove area, the total circumferential groove area, and the total area of the width direction groove and the sipe with respect to the ground contact area being made to be within the above-mentioned ranges makes it possible to increase the land part rigidity of the tread, and the synergistic effects with flexibility of rubber comprised by the rubber composition for the tread according to the present disclosure make it possible to improve riding comfort at low temperatures while exhibiting high steering stability during high-speed traveling. When the proportions of the total groove area, the total circumferential groove area, and the total area of the width direction groove and the sipe to the ground contact area are less than the above-mentioned ranges, a proportion of a land part becomes too large, causing a tendency for drainability or grip performance to decrease. On the other hand, when the proportions of the total groove area, the total circumferential groove area, and the total area of the width direction groove and the sipe to the ground contact area exceed the above-mentioned ranges, a sufficient tread land part rigidity cannot be obtained, causing a tendency for steering stability to decrease.

Besides, in the specification, the "ground contact area of the tread part" means a ground contact area of the tread part with all grooves of the tread part 2 being buried. Moreover, the ground contact area of the tread part, the total circumferential groove area, the total area of the width direction groove, and the total area of the sipe are values measured when the tread is pressed against a flat surface, with a load of the maximum load capability in a no-load state when the tire is incorporated into the normal rim and filled with the normal internal pressure.

Under conditions of an initial strain of 5%, a dynamic strain of 1%, and a frequency of 10 Hz, the rubber composition constituting the at least one rubber layer has tan $\delta$ at 30°C (30°C tan $\delta$) of over 0.15, preferably 0.16 or more, and more preferably 0.17 or more. 30°C tan $\delta$ of the rubber composition constituting the rubber layer (preferably the first layer 6) being made to be within the above-described range tends to cause a good wet grip performance. Moreover, while an upper limit of 30°C tan $\delta$ of the rubber composition is not particularly limited from the viewpoint of the effect of the present disclosure, from the viewpoint of fuel efficiency, it is preferably 0.50 or less, more preferably 0.40 or less, further preferably 0.35 or less, and particularly preferably 0.30 or less. Besides, in the present disclosure, with a vulcanized rubber test piece being produced by cutting it out from each of the rubber layers of the tread part of the tire such that the tire circumferential direction is a long side, 30°C tan $\delta$ can be measured for the rubber test piece using a dynamic viscoelasticity measurement apparatus.

Under conditions of an initial strain of 5%, a dynamic strain of 1%, and a frequency of 10 Hz, the rubber composition constituting the at least one rubber layer has complex modulus at 30°C ($E^*_{30}$) of less than 8.0 MPa, preferably 7.80 MPa or less, and more preferably 7.6 MPa or less. $E^*_{30}$ of the rubber composition constituting a rubber layer (preferably the first layer 6) being made to be in the above-described range tends to cause a good wet grip performance. Moreover, while a lower limit of $E^*_{30}$ of the rubber composition is not particularly limited from the viewpoint of the effect

of the present disclosure, it is preferably 4.0 MPa or more, more preferably 4.5 MPa or more, further preferably 5.0 MPa or more, and particularly preferably 5.5 MPa or more. Besides, in the present disclosure, with a vulcanized rubber test piece being produced by cutting it out from each of the rubber layers of the tread part of the tire such that the tire circumferential direction is a long side, $E^*_{30}$ of the rubber composition can be measured for the rubber test piece using a dynamic viscoelasticity measurement apparatus.

From the viewpoint of steering stability performance, the specific gravity of the rubber composition constituting the at least one rubber layer is preferably 1.270 or less, more preferably 1.260 or less, further preferably 1.250 or less, further preferably 1.240 or less, and particularly preferably 1.230 or less. On the other hand, moreover, while a lower limit of the specific gravity is not particularly limited from the viewpoint of the effect of the present disclosure, it is preferably 1.160 or more, more preferably 1.165 or more, and further preferably 1.170 or more. The specific gravity can be increased by increasing a content of silica, for example, and, conversely, can be decreased by decreasing the content of silica. Besides, in the specification, the specific gravity of the rubber composition is the specific gravity for a vulcanized rubber composition and is measured based on Japanese Industrial Standard JIS K 2249-4:2011.

A procedure of producing the tire comprising the tread being one embodiment of the present disclosure will be described in detail below. Note the following description is illustrative for explaining the present disclosure and is not intended to limit the technical scope of the present disclosure only to this description range. Besides, in the specification, a numerical range shown using the recitation "to" is to include the numerical values at both ends thereof.

[Rubber composition]

The tire of the present disclosure may more effectively improve wet grip performance by the previously-mentioned structure of the tire, particularly the shape of the tread, and the previously-described physical properties of the rubber composition cooperating with each other.

<Rubber component>

The rubber composition according to the present disclosure preferably comprises at least one selected from a group consisting of an isoprene-based rubber, a styrene-butadiene rubber (SBR), and a butadiene rubber (BR) as rubber components. The rubber component may be a rubber component composed of the SBR and the BR, and may be a rubber component composed of the isoprene-based rubber, the SBR, and the BR. Moreover, the rubber component may be a rubber component composed of only the SBR and the BR, and may be a rubber component composed of only the isoprene-based rubber, the SBR, and the BR.

(Isoprene-based rubbers)

Examples of the isoprene-based rubber include a natural rubber (NR), an isoprene rubber (IR), a reformed NR, a modified NR, a modified IR, and the like. As the NR, those common in the tire industry, such as, for example, SIR20, RSS#3, TSR20, and the like, can be used. The IR is not particularly limited, and, as the IR, those common in the tire industry, such as, for example, an IR 2200 and the like, can be used. Examples of the reformed NR can include a deproteinized natural rubber (DPNR), an ultra pure natural rubber, and the like, examples of the modified NR can include an epoxidized natural rubber (ENR), a hydrogenated natural rubber (HNR), a grafted natural rubber, and the like, and examples of the modified IR can include an epoxidized isoprene rubber, a hydrogenated isoprene rubber, a grafted isoprene rubber, and the like. These isoprene-based rubbers may be used alone or two or more thereof may be used in combination.

When the rubber composition comprises the isoprene-based rubber, a content of the isoprene-based rubber in 100% by mass of the rubber component is, from the viewpoint of processability and durability, preferably 20% by mass or more, more preferably 25% by mass or more, further preferably 30% by mass or more, and particularly preferably 35% by mass or more. On the other hand, while an upper limit of a content thereof in the rubber component is not particularly limited, from the viewpoint of obtaining a good riding comfort caused by damping in the tread part, it is preferably 85% by mass or less, more preferably 80% by mass or less, further preferably 75% by mass or less, and particularly preferably 70% by mass or less.

(SBR)

The SBR is not particularly limited, and examples thereof include a solution-polymerized SBR (S-SBR), an emulsion-polymerized SBR (E-SBR), modified SBRs thereof (a modified S-SBR, a modified E-SBR), and the like. Examples of the modified SBR include an SBR modified at its terminal and/or main chain, a modified SBR coupled with tin, a silicon compound, etc. (a modified SBR of condensate or having a branched structure, etc.), and the like. Furthermore, hydrogenated additives of these SBRs (hydrogenated SBRs) and the like can also be used. Among them, an S-SBR is preferable, and a modified S-SBR is more preferable.

Examples of the modified SBR include a modified SBR into which a functional group commonly used in this field is introduced. Examples of the above-described functional group include, for example, an amino group (preferably an amino group in which a hydrogen atom of the amino group is substituted with an alkyl group having 1 to 6 carbon atoms), an amide group, a silyl group, an alkoxysilyl group (preferably an alkoxysilyl group having 1 to 6 carbon atoms), an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably an alkoxy group having 1 to 6 carbon atoms), a hydroxyl group, an oxy group, an epoxy group, and the like. Besides, these functional groups may have a substituent. Examples of the substituent include, for example, a functional group such as an amino group, an amide group, an alkoxysilyl group, a carboxyl group, a hydroxyl group, and the like. Moreover, examples of the modified SBR can include a hydrogenated SBR, an epoxidized SBR, a tin-modified SBR, and the like.

As the SBR, an oil-extended SBR can be used, or a non-oil-extended SBR can be used. When the oil-extended SBR is used, an oil-extended amount of SBR, that is, a content of an oil-extended oil comprised in the SBR, is preferably 10 to 50 parts by mass based on 100 parts by mass of a rubber solid content of the SBR.

The SBRs listed above may be used alone or two or more thereof may be used in combination. As the SBRs listed above, for example, those commercially available from Sumitomo Chemical Co., Ltd., JSR Corporation, Asahi Kasei Corporation, Zeon Corporation, ZS Elastomer Co., Ltd., etc., can be used.

A styrene content of the SBR is preferably 15% by mass or more, more preferably 20% by mass or more, and further preferably 25% by mass or more, from the viewpoints of securing damping in the tread part and wet grip performance. Moreover, it is preferably 60% by mass or less, more preferably 50% by mass or less, and further preferably 45% by mass or less, from the viewpoints of temperature dependence of grip performance, and abrasion resistance. Besides, in the specification, the styrene content of the SBR is calculated by $^{1}$H-NMR measurement.

A vinyl content of the SBR is preferably 10 mol% or more, more preferably 13 mol% or more, and further preferably 16 mol% or more, from the viewpoints of ensuring reactivity with silica, rubber strength, and abrasion resistance. Moreover, the vinyl content of the SBR is preferably 70 mol% or less, more preferably 65 mol% or less, and further preferably 60 mol% or less, from the viewpoints of preventing temperature dependence from increasing, wet grip performance, elongation at break, and abrasion resistance. Besides, in the specification, the vinyl content (1,2-bond butadiene unit amount) of the SBR is measured by infrared absorption spectrometry.

A weight-average molecular weight (Mw) of the SBR is preferably 150,000 or more, more preferably 200,000 or more, and further preferably 250,000 or more, from the viewpoint of abrasion resistance. Moreover, the Mw is preferably 2,500,000 or less, more preferably 2,000,000 or less, and further preferably 1,500,000 or less, from the viewpoints of cross-linking uniformity, and the like. Besides, the Mw of the SBR can be determined in terms of a standard polystyrene based on measurement values obtained by a gel permeation chromatography (GPC) (for example, GPC-8000 Series, manufactured by Tosoh Corporation, Detector: differential refractometer, Column: TSKGEL SUPERMULTIPORE HZ-M, manufactured by Tosoh Corporation).

A content of the SBR in 100% by mass of the rubber component when the rubber composition comprises the SBR is preferably 10% by mass or more, more preferably 15% by mass or more, further preferably 20% by mass or more, and particularly preferably 25% by mass or more, from the viewpoints of securing damping in the tread part and wet grip performance. Moreover, it is preferably 85% by mass or less, more preferably 80% by mass or less, further preferably 75% by mass or less, and particularly preferably 70% by mass or less, from the viewpoint of durability improvement caused by suppression of heat dissipation of the tread part.

(BR)

The BR is not particularly limited, and those commonly used in the tire industry can be used, such as, for example, a BR having a cis content of less than 50 mol% (a low cis BR), a BR having a cis content of 90 mol% or more (a high cis BR), a rare earth-based butadiene rubber synthesized using a rare earth element-based catalyst (a rare earth-based BR), a BR containing a syndiotactic polybutadiene crystal (an SPB-containing BR), a modified BR (a high cis modified BR, a low cis modified BR), and the like. Examples of the modified BR include a BR modified with a functional group or the like similar to that described in the SBRs above. These BRs may be used alone or two or more thereof may be used in combination.

As the high cis BR, those commercially available from Zeon Corporation, Ube Industries, Ltd., JSR Corporation, etc. can be used, for example. When a high cis BR is comprised, low temperature characteristics and abrasion resistance can be improved. The cis content is preferably 95 mol% or more, more preferably 96 mol% or more, further preferably 97 mol% or more, and particularly preferably 98 mol% or more. Besides, in the specification, the cis content (cis-1,4-bond butadiene unit amount) is a value calculated by infrared absorption spectrometry.

As the rare earth-based BR, those synthesized using a rare earth element-based catalyst and having a vinyl content of preferably 1.8 mol% or less, more preferably 1.0 mol% or less, and further preferably 0.8 mol% or less, and a cis content of preferably 95 mol% or more, more preferably 96 mol% or more, further preferably 97 mol% or more, and particularly preferably 98 mol% or more can be used. As the rare earth-based BR, those commercially available from LANXESS, etc. can be used, for example.

Examples of the SPB-containing BR include those in which a 1,2-syndiotactic polybutadiene crystal is chemically bonded with the BR and dispersed, but not those in which the crystal is simply dispersed in the BR. As such an SPB-comprising BR, those commercially available from Ube Industries, Ltd., etc., can be used.

As the modified BR, a modified butadiene rubber (modified BR) modified with a functional group comprising at least one element selected from the group consisting of silicon, nitrogen, and oxygen at its terminal and/or main chain is suitably used.

Examples of other modified BRs include those obtained by polymerizing 1,3-butadiene with a lithium initiator and then adding a tin compound and in which a modified BR molecule is bonded by a tin-carbon bond at its terminal (a tin-modified BR), and the like. Moreover, the modified BR may be hydrogenated or may not be hydrogenated.

The glass transition temperature (Tg) of the BR is preferably -14 C or lower, more preferably -17 C or lower, and further preferably -20 C or lower from the viewpoint of preventing low temperature fragility. On the other hand, while a lower limit of the Tg is not particularly limited, from the viewpoint of abrasion resistance, it is preferably -150 C or higher, more preferably -120 C or higher, and further preferably -110 C or higher. Besides, the glass transition temperature of the BR is a value measured under the condition of a temperature increase rate of 10°C/min using differential scanning calorimetry (DSC) in accordance with Japanese Industrial Standard JIS K 7121.

A weight-average molecular weight (Mw) of the BR is preferably 300,000 or more, more preferably 350,000 or more, and further preferably 400,000 or more, from the viewpoint of abrasion resistance. Moreover, it is preferably 2,000,000 or less, more preferably 1,500,000 or less, and further preferably 1,000,000 or less from the viewpoints of cross-linking uniformity and the like. Besides, the Mw of the BR can be determined in terms of a standard polystyrene based on measurement values obtained by a gel permeation chromatography (GPC) (for example, GPC-8000 Series, manufactured by Tosoh Corporation, Detector: differential refractometer, Column: TSKGEL SUPERMULTIPORE HZ-M, manufactured by Tosoh Corporation).

A content of BR in 100% by mass of the rubber component when the rubber composition comprises the BR is preferably 1% by mass or more, more preferably 5% by mass or more, and further preferably 10% by mass or more, from the viewpoint of abrasion resistance. Moreover, it is preferably 40% by mass or less, more preferably 35% by mass or less, further preferably 30% by mass or less, and particularly preferably 25% by mass or less, from the viewpoint of wet grip performance.

(Other rubber components)

As the rubber component according to the present disclosure, rubber components other than the above-described isoprene-based rubbers, SBRs, and BRs may be contained. As other rubber components, a crosslinkable rubber component commonly used in the tire industry can be used, such as, for example, diene-based rubbers other than isoprene-based rubbers such as a styrene-isoprene rubber (SIR), a styrene-isoprene-butadiene copolymer rubber (SIBR), a chloroprene rubber (CR), an acrylonitrile-butadiene rubber (NBR), and the like, the SBR and the BR; and rubber components other than the diene-based rubbers, such as a butyl rubber (IIR), a Halogenized butyl rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone or two or more thereof may be used in combination. The rubber component according to the present disclosure comprises preferably 80% by mass or more, more preferably 90% by mass or more, further preferably 95% by mass or more, and particularly preferably 98% by mass or more of diene-based rubbers, and can comprise only the diene-based rubbers.

<Reinforcing filler>

The rubber composition according to the present disclosure comprises, as a reinforcing filler, preferably silica, and more preferably carbon black and silica. Moreover, the reinforcing filler may be a reinforcing filler composed of only carbon black and silica.

(Silica)

Silica is not particularly limited, and for example, those common in the tire industry can be used, such as silica prepared by a dry process (anhydrous silica), silica prepared by a wet process (hydrous silica), and the like, for example.

Among them, hydrous silica prepared by a wet process is preferable because it has many silanol groups. These silicas may be used alone or two or more thereof may be used in combination.

A nitrogen adsorption specific surface area ($N_2SA$) of silica is preferably 140 $m^2/g$ or more, more preferably 150 $m^2/g$ or more, further preferably 160 $m^2/g$ or more, and particularly preferably 170 $m^2/g$ or more, from the viewpoints of reinforcing property, and securing damping in the tread part. Moreover, it is preferably 350 $m^2/g$ or less, more preferably 300 $m^2/g$ or less, and further preferably 250 $m^2/g$ or less, from the viewpoints of heat dissipation property and processability. Besides, the $N_2SA$ of silica in the specification is a value measured by the BET method in accordance with ASTM D3037-93.

The average primary particle size of silica is preferably 20 nm or less, and more preferably 18 nm or less. A lower limit of the average primary particle size is not particularly limited and is preferably 1 nm or more, more preferably 3 nm or more, and further preferably 5 nm or more. When the average primary particle size of silica is in the above-described range, the dispersibility of silica can be improved more, and the reinforcing property, fracture properties, and abrasion resistance can be further improved. Besides, the average primary particle size of silica can be determined by observing it with a transmission or scanning electron microscope, measuring 400 or more primary particles of silica observed in the field of view, and averaging them.

A content of silica in the rubber composition based on 100 parts by mass of the rubber component when the rubber composition comprises silica is preferably 30 parts by mass or more, more preferably 35 parts by mass or more, further preferably 40 parts by mass or more, and particularly preferably 45 parts by mass or more, from the viewpoints of securing damping in the tread part, and wet grip performance. Moreover, it is preferably 110 parts by mass or less, more preferably 100 parts by mass or less, further preferably 95 parts by mass or less, and particularly preferably 90 parts by mass or less, from the viewpoints of reducing the specific gravity of rubber and realizing a light weight.

(Carbon black)

Carbon black is not particularly limited, and those common in the tire industry can be appropriately used, such as GPF, FEF, HAF, ISAF, SAF, and the like, or specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be suitably used, and, besides these, an in-house synthetic product, and the like can also be suitably used. These carbon blacks may be used alone or two or more thereof may be used in combination.

A nitrogen adsorption specific surface area ($N_2SA$) of carbon black is preferably 50 $m^2/g$ or more, more preferably 80 $m^2/g$ or more, and further preferably 100 $m^2/g$ or more from the viewpoints of weather resistance and reinforcing property. Moreover, from the viewpoints of dispersibility, fuel efficiency, fracture properties, and durability, it is preferably 250 $m^2/g$ or less and more preferably 220 $m^2/g$ or less. Besides, the $N_2SA$ of carbon black in the specification is a value measured according to method A of Japanese Industrial Standard JIS K 6217-2 "Carbon black for rubber-Fundamental characteristics-Part 2: Determination of specific surface area-Nitrogen adsorption methods-Single-point procedures".

When the rubber composition comprises the carbon black, the content thereof based on 100 parts by mass of the rubber component is, from the viewpoints of weather resistance and reinforcing property, preferably 1 parts by mass or more, more preferably 3 parts by mass or more, and further preferably 5 parts by mass or more. Moreover, from the viewpoint of fuel efficiency, it is preferably 40 parts by mass or less, more preferably 30 parts by mass or less, further preferably 20 parts by mass or less, and particularly preferably 18 parts by mass or less.

(Other reinforcing fillers)

As reinforcing fillers other than silica and carbon black, those commonly used in the tire industry conventionally, such as aluminum hydroxide, calcium carbonate, alumina, clay, talc, and the like can be compounded.

A ratio of a content of carbon black with respect to a content of silica is preferably 0.40 or less, more preferably 0.30 or less, further preferably 0.21 or less, further preferably 0.17 or less, further preferably 0.13 or less, and particularly preferably 0.10. The ratio of the content of carbon black with respect to the content of silica being made to be within the above-mentioned range makes it possible to further reduce $E^*_{30}$ of the rubber composition while maintaining the rigidity of a high-strain region, making it possible to further improve wet grip performance. On the other hand, a lower limit of the ratio of the content of carbon black with respect to the content of silica is not particularly limited, and, for example, can be 0.01 or more, 0.02 or more, or 0.05 or more, or the reinforcing filler can be a reinforcing filler not comprising carbon black.

When the rubber composition comprises the reinforcing fillers, a total content of the reinforcing fillers based on 100 parts by mass of the rubber component is preferably 30 parts by mass or more, more preferably 40 parts by mass or more, further preferably 45 parts by mass or more, and particularly preferably 50 parts by mass or more, from the viewpoints of reinforcing property, and securing damping in the tread part. From the viewpoint of the effect of the present

disclosure, it is preferably 120 parts by mass or less, more preferably 110 parts by mass or less, further preferably 100 parts by mass or less, and particularly preferably 95 parts by mass or less.

(Silane coupling agent)

Silica is preferably used in combination with a silane coupling agent. The silane coupling agent is not particularly limited, and any silane coupling agent conventionally used in combination with silica in the tire industry can be used, and examples thereof include, for example, a mercapto-based silane coupling agent as follows; a sulfide-based silane coupling agent such as bis(3-triethoxysilylpropyl)disulfide and bis(3-triethoxysilylpropyl)tetrasulfide; a thioester-based silane coupling agent such as 3-octanoylthio-1-propyltriethoxysilane, 3-hexanoylthio-1-propyltriethoxysilane, and 3-octanoylthio-1-propyltrimethoxysilane; a vinyl-based silane coupling agent such as vinyltriethoxysilane and vinyltrimethoxysilane; an amino-based silane coupling agent such as 3-aminopropyltriethoxysilane, 3-aminopropyltrimethoxysilane, and 3-(2-aminoethyl) aminopropyltriethoxysilane; a glycidoxy-based silane coupling agent such as γ-glycidoxypropyltriethoxysilane and γ-glycidoxypropyltrimethoxysilane; nitro-based silane coupling agent such as 3-nitropropyltrimethoxysilane and 3-nitropropyltriethoxysilane; a chloro-based silane coupling agent such as 3-chloropropyltrimethoxysilane and 3-chloropropyltriethoxysilane, and the like. Among them, it preferably comprises a sulfide-based silane coupling agent and/or a mercapto-based silane coupling agent. These silane coupling agents may be used alone or two or more thereof may be used in combination.

The mercapto-based silane coupling agent is preferably a compound represented by the following Formula (3) and/or a compound comprising a bond unit A represented by the following Formula (4) and a bond unit B represented by the following Formula (5):

[Chemical Formula 1]

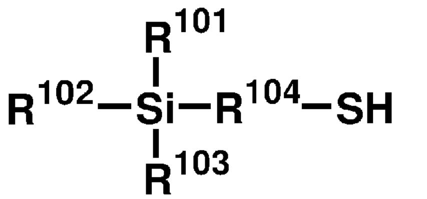

(3)

(Wherein, each of $R^{101}$, $R^{102}$, and $R^{103}$ independently represents an alkyl having 1 to 12 carbon atoms, an alkoxy having 1 to 12 carbon atoms, or a group represented by $-O-(R^{111}-O)_z-R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

[Chemical Formula 2]

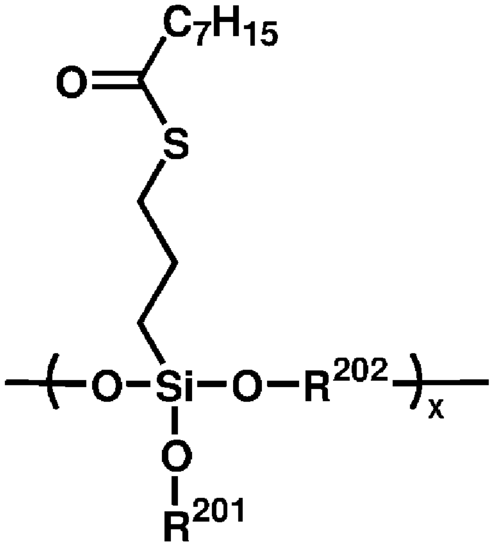

(4)

[Chemical Formula 3]

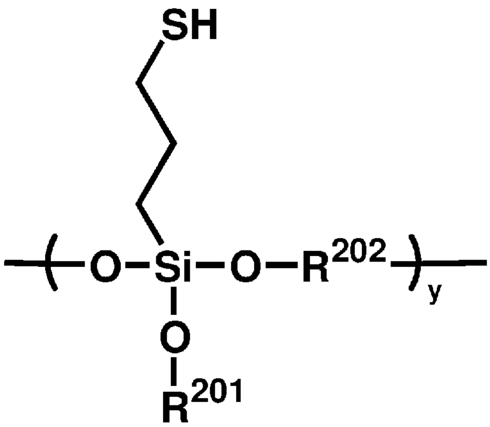

(5)

(Wherein, x represents an integer of 0 or more; y represents an integer of 1 or more; $R^{201}$ represents hydrogen atom, or an alkyl having 1 to 30 carbon atoms, an alkenyl having 2 to 30 carbon atoms or an alkynyl having 2 to 30 carbon atoms optionally substituted with a halogen atom, hydroxyl or carboxyl; $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

Examples of the compound represented by Formula (3) include, for example, 3-mercaptopropyltrimethoxysilane, 3-mercaptopropyltriethoxysilane, 2-mercaptoethyltrimethoxysilane, 2-mercaptoethyltriethoxysilane, and a compound represented by Formula (6) below (Si363 manufactured by Evonik Degussa), and the compound represented by Formula (6) below can be suitably used. They may be used alone or two or more thereof may be used in combination.

[Chemical Formula 4]

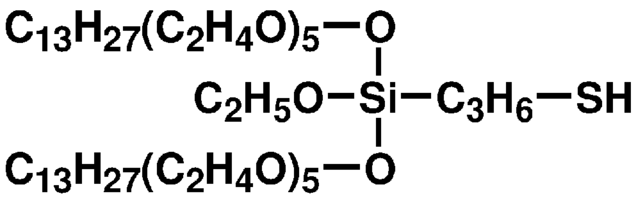

(6)

Examples of the compound comprising the bond unit A represented by Formula (4) and the bond unit B represented by Formula (5) include those commercially available from Momentive Performance Materials, and the like, for

example. They may be used alone or two or more thereof may be used in combination.

When the rubber composition comprises the silane coupling agent, the content thereof based on 100 parts by mass of silica is, from the viewpoint of increasing the dispersibility of silica, preferably 1.0 parts by mass or more, more preferably 3.0 parts by mass or more, and further preferably 5.0 parts by mass or more. Moreover, from the viewpoint of preventing a decrease in abrasion resistance, it is preferably 30 parts by mass or less, more preferably 20 parts by mass or less, and further preferably 15 parts by mass or less.

<Resin component>

The rubber composition according to the present disclosure preferably comprises a resin component. The resin component is not particularly limited, and examples thereof include a petroleum resin, a terpene-based resin, a rosin-based resin, a phenol-based resin, and the like being commonly used in the tire industry. These resin components may be used alone or two or more thereof may be used in combination.

Examples of the petroleum resin include a C5-based petroleum resin, an aromatic-based petroleum resin, and a C5-C9-based petroleum resin, for example. These petroleum resins may be used alone or two or more thereof may be used in combination.

In the specification, the "C5-based petroleum resin" refers to a resin obtained by polymerizing a C5 fraction. Examples of the C5 fraction include, for example, a petroleum fraction equivalent to 4 to 5 carbon atoms such as cyclopentadiene, pentene, pentadiene, isoprene, and the like. As the C5-based petroleum resin, a dicyclopentadiene resin (DCPD resin) is suitably used.

In the specification, the "aromatic-based petroleum resin" refers to a resin obtained by polymerizing a C9 fraction, and may be hydrogenated or modified. Examples of the C9 fraction include, for example, a petroleum fraction equivalent to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are suitably used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to be processed, and good in heat generation. As the aromatic vinyl-based resin, for example, those commercially available from Kraton Corporation, Eastman Chemical Company, etc. can be used.

In the specification, a "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as α-pinene, β-pinene, limonene, and dipentene; an aromatic-modified terpene resin made from the terpene compound and an aromatic compound; a terpene phenol resin made from a terpene compound and a phenol-based compound; and those obtainable by hydrogenating these terpene-based resins (hydrogenated terpene-based resins). Examples of the aromatic compound used as a raw material for the aromatic-modified terpene resin include, for example, styrene, α-methylstyrene, vinyltoluene, divinyltoluene, and the like. Examples of the phenol-based compound used as a raw material for the terpene phenol resin include, for example, phenol, bisphenol A, cresol, xylenol, and the like.

The rosin-based resin is not particularly limited, and examples thereof include, for example, a natural resin rosin, and a rosin modified resin being the natural resin rosin modified by hydrogenation, disproportionation, dimerization, or esterification.

The phenol-based resin is not particularly limited, and examples thereof include a phenolformaldehyde resin, an alkylphenolformaldehyde resin, an alkylphenol acetylene resin, an oil-modified phenolformaldehyde resin, and the like.

A softening point of the resin component is preferably 60°C or higher and more preferably 65°C or higher, from the viewpoint of wet grip performance. Moreover, it is preferably 150°C or lower, more preferably 140°C or lower, and further preferably 130°C or lower, from the viewpoints of processability and improvement in dispersibility of a rubber component with a filler. Besides, in the specification, the softening point can be defined as a temperature at which a sphere drops when the softening point specified in Japanese Industrial Standard JIS K 6220-1: 2001 is measured with a ring and ball softening point measuring device.

The resin component is preferably the aromatic-based petroleum resin and more preferably the aromatic vinyl-based resin, from the viewpoint of achieving a good balance of wet grip performance and steering stability performance.

A content of the resin component based on 100 parts by mass of the rubber component when the rubber composition comprises the resin component is preferably 2.0 parts by mass or more, more preferably 3.0 parts by mass or more, further preferably 4.0 parts by mass or more, and particularly preferably 5.0 parts by mass or more. The content of the resin component being made to be within the above-mentioned range makes it possible to improve heat dissipation performance in high frequency region and, at the same time, also improve adhesive friction, causing a tendency for

further improvement in wet grip performance. Moreover, from the viewpoint of durability, it is preferably 50 parts by mass or less, more preferably 40 parts by mass or less, further preferably 30 parts by mass or less, and particularly preferably 20 parts by mass or less.

<Other compounding agents>

The rubber composition according to the present disclosure can appropriately comprise compounding agents commonly used in the tire industry conventionally such as, for example, oil, wax, a processing aid, an antioxidant, stearic acid, zinc oxide, an antioxidant, a vulcanizing agent such as sulfur, etc., a vulcanization accelerator, and the like, in addition to the above-described components.

Examples of oil include, for example, a process oil, a vegetable oil and fat, an animal oil and fat, and the like. Examples of the process oil include a paraffin-based process oil, a naphthene-based process oil, an aromatic-based process oil, and the like. Moreover, as an environmental measure, a process oil having a low content of a polycyclic aromatic compound (PCA) can be used. Examples of the process oil having a low content of a PCA include a treated distillate aromatic extract (TDAE), which is an oil aromatic-based process oil being reextracted; an aromatic substitute oil being a mixed oil of asphalt and naphthenic oil; mild extraction solvates (MES); a heavy naphthenic oil; and the like.

When the rubber composition comprises the oil, the content of thereof based on 100 parts by mass of the rubber component is, from the viewpoint of processability, preferably 1 parts by mass or more, more preferably 2 parts by mass or more, further preferably 3 parts by mass or more, further preferably 5 parts by mass or more, further preferably 8 parts by mass or more, and particularly preferably 12 parts by mass or more. Moreover, it is preferably 80 parts by mass or less, more preferably 60 parts by mass or less, and further preferably 40 parts by mass or less, from the viewpoints of fuel efficiency and durability. Besides, in the present specification, the content of oil also includes an amount of oil contained in an oil-extended rubber.

When the rubber composition comprises the wax, the content thereof based on 100 parts by mass of the rubber component is, from the viewpoint of weather resistance of a rubber, preferably 0.5 parts by mass or more and more preferably 1 parts by mass or more. Moreover, it is preferably 10 parts by mass or less and more preferably 5 parts by mass or less, from the viewpoint of preventing whitening of a tire due to bloom.

As the processing aid, fatty acid metal salt aimed at reducing viscosity and securing mold releasability of an unvalcanized rubber and those widely available on a commercial basis as compatibilizers from the viewpoint of suppressing micro-level layer separation of the rubber component can be used.

When the rubber composition comprises the processing aid, the content thereof based on 100 parts by mass of the rubber component is, from the viewpoint of exhibiting the effect of improving processability, preferably 0.5 parts by mass or more and more preferably 1 parts by mass or more. Moreover, it is preferably 10 parts by mass or less and more preferably 8 parts by mass or less, from the viewpoints of abrasion resistance and breaking strength.

The antioxidant is not particularly limited, and examples thereof include, for example, each amine-based, quinoline-based, quinone-based, phenol-based, and imidazole-based compound, and an antioxidant such as a carbamate metal salt.

When the rubber composition comprises the antioxidant, the content thereof based on 100 parts by mass of the rubber component is, from the viewpoint of ozone crack resistance of a rubber, preferably 0.5 parts by mass or more and more preferably 1 parts by mass or more. Moreover, it is preferably 10 parts by mass or less and more preferably 5 parts by mass or less, from the viewpoints of abrasion resistance and wet grip performance.

When the rubber composition comprises the stearic acid, the content thereof based on 100 parts by mass of the rubber component is, from the viewpoint of processability, preferably 0.5 parts by mass or more and more preferably 1 parts by mass or more. Moreover, it is preferably 10 parts by mass or less and more preferably 5 parts by mass or less, from the viewpoint of vulcanization rate.

When the rubber composition comprises the zinc oxide, the content thereof based on 100 parts by mass of the rubber component is, from the viewpoint of processability, preferably 0.5 parts by mass or more and more preferably 1 parts by mass or more. Moreover, it is preferably 10 parts by mass or less and more preferably 5 parts by mass or less, from the viewpoint of abrasion resistance.

Sulfur is suitably used as the vulcanizing agent. As sulfur, a powdered sulfur, an oil-treated sulfur, a precipitated sulfur, a colloidal sulfur, an insoluble sulfur, a highly dispersible sulfur, and the like can be used.

When the rubber composition comprises sulfur as the vulcanizing agent, a content thereof based on 100 parts by mass of the rubber component is preferably 0.1 parts by mass or more, more preferably 0.3 parts by mass or more, and further preferably 0.5 parts by mass or more, from the viewpoint of securing a sufficient vulcanization reaction. Moreover, it is preferably 5.0 parts by mass or less, more preferably 4.0 parts by mass or less, and further preferably 3.0 parts by mass or less, from the viewpoint of preventing deterioration. Besides, a content of a vulcanizing agent when using an oil-containing sulfur as the vulcanizing agent shall be a total content of pure sulfur amounts comprised in the oil-containing sulfur.

Examples of vulcanizing agents other than sulfur include, for example, alkylphenol-sulfur chloride condensate, 1,6-hexamethylene-sodium dithiosulfate dehydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerators include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. These vulcanization accelerators may be used alone or two or more thereof may be used in combination. Among them, from the viewpoint that desired effects are more suitably obtained, one or more vulcanization accelerators selected from the group consisting of sulfenamide-based, guanidine-based, and thiazole-based vulcanization accelerators are preferable, and a combination of the sulfenamide-based vulcanization accelerator and the guanidine-based vulcanization accelerator is more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-tert-butyl-2-benzothiazolylsulfenamide (TBBS) and N-cyclohexyl-2-benzothiazolylsulfenamide (CBS) are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

When the rubber composition comprises the vulcanization accelerator, the content thereof based on 100 parts by mass of the rubber component is preferably 1.0 part by mass or more, more preferably 1.5 parts by mass or more, and further preferably 2.0 part by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less, and particularly preferably 5.0 parts by mass or less. When the content of the vulcanization accelerators is made to be within the above-described range, there is a tendency to be able to secure breaking strength and elongation.

The rubber composition according to the present disclosure can be manufactured by a known method. For example, it can be manufactured by kneading each of the previously-described components using a rubber kneading apparatus such as an open roll and a closed type kneader (Bunbury mixer, kneader, etc.).

The kneading step comprises, for example, a base kneading step of kneading compounding agents and additives other than vulcanizing agents and vulcanization accelerators, and a final kneading (F kneading) step of adding vulcanizing agents and vulcanization accelerators to the kneaded product obtained in the base kneading step and kneading them. Furthermore, the base kneading step can also be divided into a plurality of steps, if desired. Kneading conditions are not particularly limited, and, for example, a method of kneading at a discharge temperature of 150 to 170°C for 1 to 10 minutes in the base kneading step and kneading at 70 to 110°C for 1 to 5 minutes in the final kneading step is exemplified.

[Tire]

The tire of the present disclosure is suitable for a tire for a passenger car, a tire for a truck/bus, a tire for a large SUV, a racing tire, a tire for a motorcycle, and the like, and can be used as a summer tire, a winter tire, or a studless tire for each of the above-mentioned tires. Besides, in the specification, the tire for a passenger car refers to a tire assumed to be mounted on a four-wheel driven automobile, which tire has the maximum load capability of 1,000 kg or less.

A tire comprising a tread composed of the above-described rubber composition can be manufactured by a usual method. That is, the tire can be manufactured by extruding unvulcanized rubber compositions compounded with each of the above-described components based on the rubber component as necessary into the shape of at least one rubber layer constituting the tread, attaching them together with other tire members on a tire molding machine, and molding them by a usual method to form an unvulcanized tire, followed by heating and pressurizing this unvulcanized tire in a vulcanizing machine. Vulcanization conditions are not particularly limited, and, for example, a method of vulcanizing at 150 to 200°C for 10 to 30 minutes is exemplified.

EXAMPLE

Although the present disclosure will be described below based on Examples, it is not to be limited only to these Examples.

Various chemicals used in Examples and Comparative examples are shown below:

NR: TSR20

SBR: a modified solution-polymerized SBR manufactured in the below-described Manufacturing example 1 (styrene content: 30% by mass, vinyl content: 52 mol%, Mw: 250,000, non-oil-extended product)

BR: UBEPOL BR (registered trademark) 150B (cis content: 97 mol%, Tg: -108°C, Mw: 440,000), manufactured by Ube Industries, Ltd.

Carbon black: Diablack N220 ($N_2SA$: 115 $m^2/g$), manufactured by Mitsubishi Chemical Corporation

Silica: ULTRASIL (registered trademark) VN3 ($N_2SA$: 175 $m^2/g$, average primary particle size: 17 nm), manufactured by Evonik Degussa

Silane coupling agent: Si266 (bis(3-triethoxysilylpropyl)disulfide), manufactured by Evonik Degussa

Oil: VivaTec 400 (TDAE oil), manufactured by H&R Group

Resin component: Sylvares SA85 (Copolymer of $\alpha$-methylstyrene and styrene, Softening point: 85 C), manufactured by Kraton Corporation

Zinc oxide: Zinc oxide No. 1, manufactured by Mitsui Mining & Smelting Co., Ltd.

Stearic acid: Bead stearic acid "Tsubaki", manufactured by NOF CORPORATION

Sulfur: HK-200-5 (5% oil-containing powdered sulfur), manufactured by Hosoi Chemical Industry Co., Ltd.

Vulcanization accelerator 1: Nocceler CZ (N-cyclohexyl-2-benzothiazolylsulfenamide (CBS)), manufactured by Ouchi Shinko Chemical Industrial Co., Ltd.

Vulcanization accelerator 2: Nocceler D (1,3-diphenylguanidine (DPG)), manufactured by Ouchi Shinko Chemical Industrial Co., Ltd.

Manufacturing example 1: Synthesis of SBR

Cyclohexane, tetrahydrofuran, styrene, and 1,3-butadiene were charged into a nitrogen-substituted autoclave reactor. The temperature of the contents of the reactor was adjusted to 20°C, and n-butyllithium was added to initiate polymerization. Polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a modifying agent to perform reaction. After completion of the polymerization reaction, 2,6-di-tert-butyl-p-cresol was added. Next, the mixed product was removed of solvent by steam stripping and dried by a heat roll which temperature was adjusted to 110°C to obtain an SBR.

(Examples and Comparative examples)

According to the compounding formulations shown in Table 1, using a 1.7 L closed Banbury mixer, all chemicals other than sulfur and vulcanization accelerators were kneaded for 1 to 10 minutes until a discharge temperature reached 150 to 160°C to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was press-vulcanized for 12 minutes at 170°C to obtain a vulcanized test rubber composition.

Moreover, the obtained unvulcanized rubber composition was used extrude it into shapes of a first layer (thickness: 3.0 mm) of the tread with an extruder comprising a base having a predetermined shape and attach it together with a second layer (thickness: 3.0 mm) of the tread, and other tire members to produce an unvulcanized tire, followed by press vulcanization for 12 minutes under a condition of 170°C to obtain each of test tires described in Tables 2 to 5.

The following evaluation was performed for the obtained vulcanized test rubber composition and test tire. Evaluation results are shown in Tables 2 to 5.

<tan $\delta$ and complex modulus E* measurements>

Each of vulcanized rubber test pieces was produced by cutting it out for a length of 20 mm x a width of 4 mm x a thickness of 2 mm from each of the rubber layers of the tread part of each of the test tires such that the tire circumferential direction is a long side. For each of the rubber test pieces, using a dynamic viscoelasticity measurement apparatus (EPLEXOR series, manufactured by GABO Qualimeter Testanlagen GmbH), tan $\delta$ and complex modulus (E*) were measured under conditions of the temperature of 30°C, an initial strain of 5%, a dynamic strain of 1%, and a frequency of 10 Hz. The results are shown in Table 1. Besides, the thickness direction of a sample was set to be the tire radial direction.

<Wet grip performance>

Each of the test tires was filled with air at 250 kPa and mounted to all wheels of an automobile with a displacement of 2,000 cc, brakes were applied when traveling at an initial speed of 100 km/h on a wet asphalt road surface, and the braking distance was measured. A value of the inverse of the braking distance was displayed as an index with the braking distance in Reference example (Example 1 in Tables 2 and 3, Example 9 in Table 4, and Example 13 in Table 5) being set as 100. The index indicates that the greater the index, the better the wet grip performance.

<Steering stability performance>

Each of the test tires was filled with air at 250 kPa and mounted to all wheels of an automobile with a displacement of 2,000 cc, and the actual vehicle was made to run on a test course having a dry asphalt surface. Handling characteristic was evaluated based on feeling at each of the times of running straight, changing lanes, and accelerating/decelerating when running at 120 km/h by a test driver. Evaluation was performed using an integer value of 1 to 10 points, and a total score by 10 test drivers was calculated based on evaluation criteria in which the higher the score, the better the handling characteristic. The total score in Reference example (Example 1 in Table 2 and Table 3, Example 9 in Table 4, and Example 13 in Table 5) was converted into a reference value (100), and an evaluation result of each of the test tires was displayed as an index so as to be proportional to the total score.

Table 1

| First layer compounding | Manufacturing example | | | | | | | | |
|---|---|---|---|---|---|---|---|---|---|
| | A1 | A2 | A3 | A4 | A5 | A6 | A7 | A8 | A9 |
| Compounding amount (part by mass) | | | | | | | | | |
| NR | 35 | 35 | 35 | 35 | 35 | 35 | - | 30 | 40 |
| SBR | 55 | 55 | 55 | 55 | 55 | 55 | 80 | 50 | 50 |
| BR | 10 | 10 | 10 | 10 | 10 | 10 | 20 | 20 | 10 |
| Carbon black | 15 | 15 | 15 | 12 | 5.0 | 12 | 5.0 | 15 | 15 |
| Silica | 55 | 55 | 55 | 60 | 68 | 60 | 80 | 85 | 45 |
| Silane coupling agent | 4.4 | 4.4 | 4.4 | 4.8 | 5.4 | 4.8 | 6.4 | 6.8 | 4.5 |
| Oil | 24 | 20 | 20 | 20 | 20 | 20 | - | 5.0 | 10 |
| Resin component | 2.0 | 2.0 | 5.0 | 5.0 | 8.0 | 2.0 | 20 | 10 | 3.0 |
| Zinc oxide | 3.0 | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 | 3.0 |
| Sulfur | 1.8 | 1.8 | 1.8 | 1.8 | 1.8 | 1.8 | 1.8 | 1.8 | 1.8 |
| Vulcanization accelerator 1 | 2.5 | 2.5 | 2.5 | 2.5 | 2.5 | 2.5 | 2.5 | 2.5 | 2.5 |
| Vulcanization accelerator 2 | 2.0 | 2.0 | 2.0 | 2.0 | 2.0 | 2.0 | 2.0 | 2.0 | 2.0 |
| $E^*_{30}$ (MPa) | 6.0 | 6.7 | 6.3 | 6.6 | 7.5 | 7.0 | 7.9 | 11.0 | 5.0 |
| 30°C tan $\delta$ | 0.16 | 0.16 | 0.17 | 0.17 | 0.16 | 0.16 | 0.23 | 0.25 | 0.14 |
| Specific gravity | 1.175 | 1.180 | 1.177 | 1.189 | 1.186 | 1.187 | 1.210 | 1.259 | 1.165 |

Table 2
(Size:195/65R15 91V, Rim:15X6.0J, Internal pressure:240kPa)

| | Example | | | | | | | |
|---|---|---|---|---|---|---|---|---|
| | 1 | 2 | 3 | 4 | 5 | 6 | 7 | 8 |
| First layer compounding | A1 | A2 | A3 | A4 | A5 | A7 | A5 | A5 |
| Groove depth H (mm) | 8.0 | 7.5 | 7.5 | 7.5 | 7.5 | 7.5 | 7.5 | 7.5 |
| H/E*30 | 1.33 | 1.12 | 1.19 | 1.14 | 1.00 | 0.95 | 1.00 | 1.00 |

(continued)

(Size:195/65R15 91V, Rim:15X6.0J, Internal pressure:240kPa)

| | Example | | | | | | | |
|---|---|---|---|---|---|---|---|---|
| | 1 | 2 | 3 | 4 | 5 | 6 | 7 | 8 |
| G (kg) | 8.00 | 7.80 | 7.80 | 7.80 | 7.80 | 7.80 | 7.80 | 7.80 |
| $W_L$ (kg) | 615 | 615 | 615 | 615 | 615 | 615 | 615 | 615 |
| $G/W_L$ | 0.130 | 0.0127 | 0.0127 | 0.0127 | 0.0127 | 0.0127 | 0.0127 | 0.0127 |
| 30°C tan $\delta$/G | 0.020 | 0.021 | 0.022 | 0.022 | 0.021 | 0.029 | 0.021 | 0.021 |
| Center land part area/Land part area | 0.45 | 0.45 | 0.45 | 0.45 | 0.45 | 0.45 | 0.55 | 0.45 |
| Circumferential groove area/ Ground contact area | 0.12 | 0.12 | 0.12 | 0.12 | 0.12 | 0.12 | 0.12 | 0.12 |
| Width direction groove area + Sipe area/Ground contact area | 0.10 | 0.10 | 0.10 | 0.10 | 0.10 | 0.10 | 0.10 | 0.10 |
| | Example | | | | | | | |
| | 1 | 2 | 3 | 4 | 5 | 6 | 7 | 8 |
| La/Lb | 0.14 | 0.14 | 0.14 | 0.14 | 0.14 | 0.14 | 0.14 | 0.18 |
| Index | | | | | | | | |
| Wet grip performance | 100 | 101 | 104 | 107 | 109 | 115 | 111 | 104 |
| Steering stability performance | 100 | 103 | 104 | 105 | 106 | 101 | 103 | 110 |

Table 3

(Size:195/65R15 91V, Rim:15X6.0J, Internal pressure:240kPa)

| | Comparative example | | | | | | | |
|---|---|---|---|---|---|---|---|---|
| | 1 | 2 | 3 | 4 | 5 | 6 | 7 | 8 |
| First layer compounding | A2 | A2 | A6 | A4 | A8 | A9 | A8 | A8 |
| Groove depth H (mm) | 9.0 | 8.5 | 8.5 | 8.5 | 7.5 | 7.5 | 7.5 | 7.5 |
| H/E*30 | 1.34 | 1.27 | 1.21 | 1.29 | 0.68 | 1.50 | 0.68 | 0.68 |
| G (kg) | 8.50 | 9.40 | 9.40 | 9.40 | 7.80 | 7.80 | 7.80 | 7.80 |
| $W_L$ (kg) | 615 | 615 | 615 | 615 | 615 | 615 | 615 | 615 |
| $G/W_L$ | 0.0138 | 0.0153 | 0.0153 | 0.0153 | 0.0127 | 0.0127 | 0.0127 | 0.0127 |
| 30°C tan $\delta$/G | 0.019 | 0.017 | 0.017 | 0.018 | 0.032 | 0.021 | 0.032 | 0.032 |
| Center land part area/Land part area | 0.45 | 0.45 | 0.45 | 0.45 | 0.45 | 0.45 | 0.30 | 0.45 |
| Circumferential groove area/ Ground contact area | 0.12 | 0.12 | 0.12 | 0.12 | 0.12 | 0.12 | 0.12 | 0.12 |
| Width direction groove area + Sipe area/Ground contact area | 0.10 | 0.10 | 0.10 | 0.10 | 0.10 | 0.10 | 0.10 | 0.06 |
| | Comparative example | | | | | | | |
| | 1 | 2 | 3 | 4 | 5 | 6 | 7 | 8 |
| La/Lb | 0.14 | 0.14 | 0.14 | 0.14 | 0.14 | 0.14 | 0.14 | 0.14 |

(continued)

| | | | | | | | | |
|---|---|---|---|---|---|---|---|---|
| Index | | | | | | | | |
| Wet grip performance | 92 | 94 | 95 | 96 | 99 | 91 | 97 | 99 |
| Steering stability performance | 94 | 96 | 97 | 98 | 94 | 92 | 94 | 93 |

Table 4
(Size:225/55R17 97V, Rim:17X7.0J, Internal pressure:250kPa)

| | Example | | | | Comparative example | | | |
|---|---|---|---|---|---|---|---|---|
| | 9 | 10 | 11 | 12 | 9 | 10 | 11 | 12 |
| First layer compounding | A2 | A3 | A4 | A7 | A2 | A4 | A8 | A9 |
| Groove depth H (mm) | 7.4 | 7.4 | 7.4 | 7.4 | 7.4 | 7.4 | 7.4 | 7.4 |
| $H/E^*_{30}$ | 1.10 | 1.17 | 1.12 | 0.94 | 1.10 | 1.12 | 0.67 | 1.48 |
| G (kg) | 9.30 | 9.30 | 9.30 | 9.30 | 9.80 | 9.80 | 9.30 | 9.30 |
| $W_L$ (kg) | 730 | 730 | 730 | 730 | 730 | 730 | 730 | 730 |
| $G/W_L$ | 0.127 | 0.127 | 0.127 | 0.127 | 0.134 | 0.134 | 0.127 | 0.127 |
| 30°C tan $\delta$/G | 0.017 | 0.018 | 0.018 | 0.025 | 0.017 | 0.018 | 0.027 | 0.015 |
| Center land part area/Land part area | 0.44 | 0.44 | 0.44 | 0.44 | 0.44 | 0.44 | 0.44 | 0.44 |
| Circumferential groove area/Ground contact area | 0.12 | 0.12 | 0.12 | 0.12 | 0.12 | 0.12 | 0.12 | 0.12 |
| Width direction groove area + Sipe | 0.10 | 0.10 | 0.10 | 0.10 | 0.10 | 0.10 | 0.10 | 0.10 |
| | Example | | | | Comparative example | | | |
| | 9 | 10 | 11 | 12 | 9 | 10 | 11 | 12 |
| area/Ground contact area | | | | | | | | |
| La/Lb | 0.14 | 0.14 | 0.14 | 0.14 | 0.14 | 0.14 | 0.14 | 0.14 |
| Index | | | | | | | | |
| Wet grip performance | 100 | 104 | 106 | 112 | 92 | 97 | 95 | 91 |
| Steering stability performance | 100 | 101 | 103 | 98 | 96 | 96 | 93 | 90 |

Table 5
(Size:185/55R16 83V, Rim:16X7.0J, Internal pressure:250kPa)

| | Example | | | | Comparative example | | | |
|---|---|---|---|---|---|---|---|---|
| | 13 | 14 | 15 | 16 | 13 | 14 | 15 | 16 |
| First layer compounding | A2 | A3 | A4 | A7 | A2 | A4 | A8 | A9 |
| Groove depth H (mm) | 7.0 | 7.0 | 7.0 | 7.0 | 7.0 | 7.0 | 7.0 | 7.0 |
| H/E*30 | 1.04 | 1.11 | 1.06 | 0.89 | 1.04 | 1.06 | 0.64 | 1.40 |
| G (kg) | 6.20 | 6.20 | 6.20 | 6.20 | 6.50 | 6.50 | 6.20 | 6.20 |
| $W_L$ (kg) | 487 | 487 | 487 | 487 | 487 | 487 | 487 | 487 |
| $G/W_L$ | 0.0127 | 0.0127 | 0.0127 | 0.0127 | 0.0133 | 0.0133 | 0.0127 | 0.0127 |
| 30°C tan $\delta$/G | 0.026 | 0.027 | 0.027 | 0.037 | 0.025 | 0.026 | 0.040 | 0.023 |

(continued)

(Size:185/55R16 83V, Rim:16X7.0J, Internal pressure:250kPa)

| | Example | | | | Comparative example | | | |
|---|---|---|---|---|---|---|---|---|
| | 13 | 14 | 15 | 16 | 13 | 14 | 15 | 16 |
| Center land part area/Land part area | 0.44 | 0.44 | 0.44 | 0.44 | 0.44 | 0.44 | 0.44 | 0.44 |
| Circumferential groove area/ Ground contact area | 0.12 | 0.12 | 0.12 | 0.12 | 0.12 | 0.12 | 0.12 | 0.12 |
| Width direction groove area + Sipe area/Ground contact area | 0.10 | 0.10 | 0.10 | 0.10 | 0.10 | 0.10 | 0.10 | 0.10 |
| | Example | | | | Comparative example | | | |
| | 13 | 14 | 15 | 16 | 13 | 14 | 15 | 16 |
| La/Lb | 0.14 | 0.14 | 0.14 | 0.14 | 0.14 | 0.14 | 0.14 | 0.14 |
| Index | | | | | | | | |
| Wet grip performance | 100 | 103 | 106 | 113 | 93 | 97 | 96 | 90 |
| Steering stability performance | 100 | 101 | 102 | 99 | 95 | 96 | 93 | 90 |

Based on the results of Tables 1 to 5, for a tire of the present disclosure in which tire a tire weight with respect to the maximum load capability of the tire, and tan $\delta$ and complex modulus of the rubber composition constituting the tread are made to be within predetermined ranges, it is evident that there is an improvement in wet grip performance. Moreover, in a preferred aspect, it is evident that there is also an improvement in steering stability performance.

REFERENCE SIGNS LIST

1 Circumferential groove
2 Land part
3 Tread surface
4 Extension line of land part
5 Extension line of deepest part of groove bottom of circumferential groove
6 First layer
7 Second layer
8 Extension line of outermost part of second layer
10 Tread part
11 Center land part
12 Shoulder land part
21 Width direction groove
22, 23 Sipe

## Claims

**1.** A tire comprising a tread part (10),

wherein a ratio ($G/W_L$) of a tire weight G (kg) with respect to a maximum load capability $W_L$ (kg) of the tire is 0.0131 or less, wherein

the tire weight G (kg) indicates the weight of a standalone tire unit not including the weight of the rim, and in a case that a noise damping material, a sealant, a sensor, and the like are mounted to a tire inner cavity

part, the tire weight G is a value including the weights thereof;
in a case of a tire having a size specified in the JATMA standard, the maximum load capability $W_L$ (kg) indicates a load capability value (kg) when a maximum air pressure (kPa) is filled, which maximum air pressure (kPa) corresponds to a tire having, under the use conditions defined in the JATMA standard, a load index (LI) thereof; and
in a case of a tire having a size not specified in the JATMA standard, it is to be a value calculated using the following Equations (1) and (2):

$$(1) \quad V = \{(Dt/2)^2-(Dt/2-Ht)^2\}\times\pi\times Wt,$$

$$(2) \quad W_L = 0.000011\times V+100,$$

where Wt (mm) is a tire cross-sectional width indicating a maximum width between side wall outer surfaces in a normal state, with any patterns or letters on a tire side surface being excluded, Ht (mm) is a tire cross-sectional height indicating the distance from a bead part bottom surface to a tread uppermost surface and being 1/2 the difference between an outer diameter and a port rim diameter of the tire, and Dt (mm) is the tire outer diameter when the tire is filled with air at 250 kPa;

wherein the tread comprises at least one rubber layer (6,7) composed of a rubber composition comprising a rubber component and a reinforcing filler,
wherein, under conditions of an initial strain of 5%, a dynamic strain of 1%, and a frequency of 10 Hz, tan $\delta$ at 30°C (30°C tan $\delta$) of the rubber composition is over 0.15, and complex modulus at 30°C ($E^*_{30}$) of the rubber composition is less than 8.0 MPa, and
wherein a ratio (30°C tan $\delta$/G) of the 30°C tan $\delta$ with respect to the tire weight G is 0.016 or more.

**2.** The tire of claim 1, wherein the reinforcing filler comprises silica, and a ratio of a content of carbon black with respect to a content of silica in the reinforcing filler is 0.21 or less.

**3.** The tire of claim 1 or 2, wherein the rubber composition comprises 4.0 parts by mass or more of a resin component based on 100 parts by mass of the rubber component.

**4.** The tire of any one of claims 1 to 3, wherein a specific gravity of the rubber composition is 1.270 or less.

**5.** The tire of any one of claims 1 to 4,

wherein the tread part (10) has a land part (2) being partitioned by two or more circumferential grooves (1) extending continuously in the tire circumferential direction (C), and,
when H is a distance between an extension line (4) of the land part (2) and an extension line (5) of a deepest part of the groove bottom of the circumferential groove (1), a rubber layer composed of the rubber composition is arranged in at least a part of a region having the distance H from the uppermost surface to the inner side in the radial direction of the land part (2).

**6.** The tire of claim 5, wherein $H/E^*_{30}$ is 1.30 or less.

**7.** The tire of claim 5 or 6,

wherein the tread part (10) has a pair of shoulder land parts (11) partitioned by the circumferential grooves (1), and a center land part (12) located between the pair of shoulder land parts (11), and
a ratio of a total center land part area with respect to a total land part area is 0.35 to 0.80.

**8.** The tire of any one of claims 1 to 7,

wherein the tread part (10) has two or more circumferential grooves (1) extending continuously in the tire circumferential direction (C), a width direction groove (21), and a sipe (22, 23), and
a ratio of a total groove area with respect to a ground contact area of the tread part (10) is 0.15 to 0.35.

**9.** The tire of claim 8,
wherein a total circumferential groove area with respect to the ground contact area of the tread part (10) is 0.09 to 0.16, and a total area of the width direction groove (21) and the sipe (22, 23) with respect to the ground contact area of the tread part (10) is 0.08 to 0.14.

**10.** The tire of claim 8 or 9,
wherein a ratio La/Lb of a length La of the tire in the circumferential direction (C) and a total sum Lb of a total Lb1 of width direction edge component lengths of width direction grooves (21) and a total Lb2 of width direction edge component lengths of sipes is 0.10 to 0.20.

**11.** The tire of any one of claims 8 to 10,
wherein the tread part (10) has the sipe (22, 23), both ends of which sipe (22, 23) are not being opened to the circumferential grooves (1).

**12.** The tire of any one of claims 1 to 11,

wherein the tread part (10) comprises a first rubber layer (6) constituting a tread surface (3) and a second rubber layer (7) being arranged adjacent on the inner side of the first rubber layer (6) in the radial direction, and
at least one of the first rubber layer (6) and the second rubber layer (7) is composed of the rubber composition.

**13.** The tire of claim 12,
wherein the deepest part of the groove bottom of a circumferential groove (1) is formed so as to be located on the inner side of an outermost part of the second rubber layer (7) in the tire radial direction.

**14.** The tire of claim 12 or 13,
wherein a proportion (t2/t1) of a thickness t2 of the second rubber layer (7) with respect to a thickness t1 of the first rubber layer (6) is 5/95 to 60/40.

## Patentansprüche

**1.** Reifen, der einen Laufflächenteil (10) aufweist,
wobei ein Verhältnis ($G/W_L$) eines Reifengewichts G (kg) bezüglich einer maximalen Lastfähigkeit $W_L$ (kg) des Reifens 0,0131 oder weniger ist, wobei:

das Reifengewicht G (kg) das Gewicht einer alleinstehenden Reifeneinheit ausschließlich des Gewichts der Felge anzeigt und in einem Fall, dass ein Geräuschdämpfungsmaterial, ein Dichtmittel, ein Sensor und dergleichen an einem Reifeninnenhohlraumteil montiert sind, das Reifengewicht G ein Wert ist, der die Gewichte von diesen umfasst;
in einem Fall eines Reifens, der eine Größe hat, die in dem JATMA-Standard spezifiziert ist, die maximale Lastfähigkeit $W_L$ (kg) einen Lastfähigkeitswert (kg) anzeigt, wenn ein maximaler Luftdruck (kPa) eingefüllt ist, welcher maximale Luftdruck (kPa) zu einem Reifen korrespondiert, der unter den Verwendungsbedingungen, die in dem JATMA-Standard definiert sind, einen Lastindex (LI) davon hat; und
in einem Fall eines Reifens, der eine Größe hat, die nicht in dem JATMA-Standard spezifiziert ist, diese ein Wert sein soll, der unter Verwendung der folgenden Gleichungen (1) und (2) berechnet wird:

$$(1) \quad V = \{(Dt/2)^2-(Dt/2-Ht)^2\}\times\pi\times Wt,$$

$$(2) \quad W_L = 0{,}000011\times V+100,$$

wo Wt (mm) eine Reifenquerschnittsbreite ist, die eine Maximalbreite zwischen Seitenwandaußenflächen in einem Normalzustand anzeigt, mit jeglichen Mustern oder Buchstaben an einer Reifenseitenfläche ausgeschlossen, Ht (mm) eine Reifenquerschnittshöhe ist, die die Entfernung von einer Wulstteilbodenfläche zu einer obersten Fläche einer Lauffläche anzeigt und eine Hälfte der Differenz zwischen einem Außendurchmesser und einem Anschlussfelgendurchmesser des Reifens ist, und Dt (mm) der Reifenaußendurchmesser ist, wenn der Reifen mit Luft bei 250 kPa gefüllt ist;

wobei die Lauffläche mindestens eine Kautschuklage (6,7) aufweist, die aus einer Kautschukkomposition zusammengesetzt ist, die eine Kautschukkomponente und ein Verstärkungsfüllmaterial aufweist,
wobei unter Bedingungen einer initialen Belastung von 5 %, einer dynamischen Belastung von 1 % und einer Frequenz von 10 Hz tan $\delta$ bei 30 °C (30 °C tan $\delta$) der Kautschukkomposition über 0,15 ist und ein komplexes Modul bei 30 °C ($E^*_{30}$) der Kautschukkomposition weniger als 8,0 MPa ist, und
wobei ein Verhältnis (30 °C tan $\delta$/G) des 30 °C tan $\delta$ bezüglich des Reifengewichts G 0,016 oder mehr ist.

**2.** Reifen nach Anspruch 1, wobei das Verstärkungsfüllmaterial Kieselsäure aufweist und ein Verhältnis eines Inhalts von Rußschwarz bezüglich eines Inhalts von Kieselsäure in dem Verstärkungsfüllmaterial 0,21 oder weniger ist.

**3.** Reifen nach Anspruch 1 oder 2, wobei die Kautschukkomposition 4,0 Massenanteile oder mehr einer Harzkomponente auf Grundlage von 100 Massenanteilen der Kautschukkomponente aufweist.

**4.** Reifen nach einem der Ansprüche 1 bis 3, wobei ein spezifisches Gewicht der Kautschukkomposition 1,270 oder weniger ist.

**5.** Reifen nach einem der Ansprüche 1 bis 4,

wobei der Laufflächenteil (10) einen Stegteil (2) hat, der durch zwei oder mehr Umfangsnuten (1) unterteilt ist, die sich kontinuierlich in der Reifenumfangsrichtung (C) erstrecken, und
wenn H eine Entfernung zwischen einer Verlängerungslinie (4) des Stegteils (2) und einer Verlängerungslinie (5) eines tiefsten Teils des Nutbodens der Umfangsnut (1) ist, eine Kautschuklage, die aus der Kautschukkomposition aufgebaut ist, in mindestens einem Teil eines Bereichs angeordnet ist, der die Entfernung H von der obersten Fläche zu der Innenseite in der Radialrichtung des Stegteils (2) hat.

**6.** Reifen nach Anspruch 5, wobei $H/E^*_{30}$ 1,30 oder weniger ist.

**7.** Reifen nach Anspruch 5 oder 6,

wobei der Laufflächenteil (10) ein Paar Schulterstegteile (11), die durch die Umfangsnuten (1) unterteilt sind, und einen Zentrumsstegteil (12) hat, der zwischen dem Paar Schulterstegteile (11) liegt, und
ein Verhältnis einer Gesamtzentrumsstegteilfläche bezüglich einer Gesamtstegteilfläche 0,35 bis 0,80 ist.

**8.** Reifen nach einem der Ansprüche 1 bis 7,

wobei der Laufflächenteil (10) zwei oder mehr Umfangsnuten (1), die sich kontinuierlich in der Reifenumfangsrichtung (C) erstrecken, eine Breitenrichtungsnut (21) und eine Lamelle (22, 23) hat, und
ein Verhältnis einer Gesamtnutfläche bezüglich einer Bodenberührfläche des Laufflächenteils (10) 0,15 bis 0,35 ist.

**9.** Reifen nach Anspruch 8,
wobei eine Gesamtumfangsnutfläche bezüglich der Bodenberührfläche des Laufflächenteils (10) 0,09 bis 0,16 ist und eine Gesamtfläche der Breitenrichtungsnut (21) und der Lamelle (22, 23) bezüglich der Bodenberührfläche des Laufflächenteils (10) 0,08 bis 0,14 ist.

**10.** Reifen nach Anspruch 8 oder 9,
wobei ein Verhältnis La/Lb einer Länge La des Reifens in der Umfangsrichtung (C) und einer Gesamtsumme Lb eines Gesamtbetrags Lb1 von Breitenrichtungskantenkomponentenlängen von Breitenrichtungsnuten (21) und eines Gesamtbetrags Lb2 von Breitenrichtungskantenkomponentenlängen von Lamellen 0,10 bis 0,20 ist.

**11.** Reifen nach einem der Ansprüche 8 bis 10,
wobei der Laufflächenteil (10) die Lamelle (22, 23) hat, wobei beide Enden von welcher Lamelle (22, 23) nicht zu den Umfangsnuten (1) geöffnet sind.

**12.** Reifen nach einem der Ansprüche 1 bis 11,

wobei der Laufflächenteil (10) eine erste Kautschuklage (6), die eine Laufflächenoberfläche (3) bildet, und eine zweite Kautschuklage (7) aufweist, die benachbart an der Innenseite der ersten Kautschuklage (6) in der Radialrichtung angeordnet ist, und
die erste Kautschuklage (6) und/oder die zweite Kautschuklage (7) aus der Kautschukkomposition aufgebaut ist.

**13.** Reifen nach Anspruch 12,
wobei der tiefste Teil des Nutbodens einer Umfangsnut (1) so ausgebildet ist, dass er an der Innenseite eines äußersten Teils der zweiten Kautschuklage (7) in der Reifenradialrichtung liegt.

**14.** Reifen nach Anspruch 12 oder 13,
wobei eine Proportion (t2/t1) einer Dicke t2 der zweiten Kautschuklage (7) bezüglich einer Dicke t1 der ersten Kautschuklage (6) 5/95 bis 60/40 ist.

## Revendications

**1.** Pneu comprenant une partie de la bande de roulement (10),

dans lequel le rapport ($G/W_L$) d'un poids du pneu G (kg) par rapport à la capacité de charge maximale $W_L$ (kg) du pneu est inférieur ou égal à 0,0131, dans lequel

le poids du pneu G (kg) indique le poids d'une unité de pneu autonome n'incluant pas le poids de la jante, et dans le cas où un matériau d'amortissement du bruit, un produit d'étanchéité, un capteur et autres sont montés sur une partie de la cavité interne du pneu, le poids du pneu G est une valeur incluant les poids de ces éléments ;
dans le cas d'un pneu ayant une taille spécifiée dans la norme de la JATMA, la capacité de charge maximale $W_L$ (kg) indique une valeur de capacité de charge (kg) lorsqu'une pression d'air maximale (kPa) est remplie, laquelle pression d'air maximale (kPa) correspond à un pneu ayant, dans les conditions d'utilisation définies dans la norme de la JATMA, un indice de charge (LI) de celui-ci ; et
dans le cas d'un pneu dont la taille n'est pas spécifiée dans la norme de la JATMA, il s'agit d'une valeur calculée en utilisant les équations (1) et (2) suivantes :

$$(1)\ V = \{(Dt/2)^2-(Dt/2-Ht)^2\}\times\pi\times Wt,$$

$$(2)\ W_L = 0{,}000011\times V+100,$$

où Wt (mm) est une largeur de section transversale du pneu indiquant une largeur maximale entre les surfaces extérieures des parois latérales dans un état normal, tout motif ou lettre sur une surface latérale du pneu étant exclu, Ht (mm) est une hauteur de section transversale du pneu indiquant la distance entre une surface inférieure de la partie bourrelet et une surface supérieure de la bande de roulement et étant 1/2 de la différence entre un diamètre extérieur et un diamètre de l'ouverture de la jante du pneu, et Dt (mm) est le diamètre extérieur du pneu lorsque le pneu est rempli d'air à 250 kPa ;

dans lequel la bande de roulement comprend au moins une couche de caoutchouc (6, 7) composée d'une composition de caoutchouc comprenant un composant de caoutchouc et une charge renforçante,
dans lequel, dans des conditions de contrainte initiale de 5 %, de contrainte dynamique de 1 % et de fréquence de 10 Hz, tan $\delta$ à 30°C (30°C tan $\delta$) de la composition de caoutchouc est supérieur à 0,15, et le module complexe à 30°C ($E^*_{30}$) de la composition de caoutchouc est inférieur à 8,0 MPa, et
dans lequel un rapport (30°C tan $\delta$/G) du 30°C tan $\delta$ par rapport au poids du pneu G est supérieur ou égal à 0,016.

**2.** Pneu de la revendication 1, dans lequel la charge renforçante comprend de la silice, et un rapport d'une teneur en noir de carbone par rapport à une teneur en silice dans la charge renforçante est de 0,21 ou moins.

**3.** Pneu de la revendication 1 ou 2, dans lequel la composition de caoutchouc comprend 4,0 parties en masse ou plus d'un composant de résine sur la base de 100 parties en masse du composant de caoutchouc.

**4.** Pneu de l'une des revendications 1 à 3, dans lequel une gravité spécifique de la composition de caoutchouc est de 1,270 ou moins.

**5.** Pneu de l'une des revendications 1 à 4,

dans lequel la partie de la bande de roulement (10) a une partie pleine (2) étant partitionnée par deux ou plusieurs rainures circonférentielles (1) s'étendant continuellement dans la direction circonférentielle du pneu (C), et,
lorsque H est une distance entre une ligne d'extension (4) de la partie pleine (2) et une ligne d'extension (5) d'une partie la plus profonde du fond de la rainure circonférentielle (1), une couche de caoutchouc composée de la composition de caoutchouc est disposée dans au moins une partie d'une région ayant la distance H de la surface la plus élevée au côté intérieur dans la direction radiale de la partie pleine (2).

**6.** Pneu de la revendication 5, dans lequel $H/E^*_{30}$ est égal ou inférieur à 1,30.

**7.** Pneu de la revendication 5 ou 6,

dans lequel la partie de la bande de roulement (10) a une paire de parties pleines d'épaulement (11) séparées par les rainures circonférentielles (1), et une partie pleine centrale (12) située entre la paire de parties pleines d'épaulement (11), et où
un rapport entre une surface totale de la partie pleine centrale et la surface totale de la partie pleine est compris entre 0,35 et 0,80.

**8.** Pneu de l'une des revendications 1 à 7,

dans lequel la partie de la bande de roulement (10) a deux ou plusieurs rainures circonférentielles (1) s'étendant continuellement dans la direction circonférentielle du pneu (C), une rainure dans le sens de la largeur (21), et une lamelle (22, 23), et où
le rapport entre la surface totale des rainures et la surface de contact au sol de la bande de roulement (10) est compris entre 0,15 et 0,35.

**9.** Pneu de la revendication 8,
dans lequel une surface totale de rainure circonférentielle par rapport à la surface de contact au sol de la partie de la bande de roulement (10) est comprise entre 0,09 et 0,16, et une surface totale de la rainure dans le sens de la largeur (21) et de la lamelle (22, 23) par rapport à la surface de contact au sol de la partie de la bande de roulement (10) est comprise entre 0,08 et 0,14.

**10.** Pneu de la revendication 8 ou 9,
dans lequel un rapport La/Lb d'une longueur La du pneu dans la direction circonférentielle (C) et une somme totale Lb d'un total Lb1 des longueurs des composants du bord de la direction de la largeur des rainures de la direction de la largeur (21) et d'un total Lb2 des longueurs des composants du bord de la direction de la largeur de lamelles est de 0,10 à 0,20.

**11.** Pneu de l'une des revendications 8 à 10,
dans lequel la partie de la bande de roulement (10) a la lamelle (22, 23), dont les deux extrémités de la lamelle (22, 23) ne sont pas ouvertes aux rainures circonférentielles (1).

**12.** Pneu de l'une des revendications 1 à 11,

dans lequel la partie de bande de roulement (10) comprend une première couche de caoutchouc (6) constituant une surface de bande de roulement (3) et une deuxième couche de caoutchouc (7) étant disposée de manière adjacente sur le côté intérieur de la première couche de caoutchouc (6) dans la direction radiale, et
au moins l'une de la première couche de caoutchouc (6) et de la seconde couche de caoutchouc (7) est composée de la composition de caoutchouc.

**13.** Pneu de la revendication 12,
dans lequel la partie la plus profonde du fond de la rainure d'une rainure circonférentielle (1) est formée de manière à être située sur le côté intérieur d'une partie la plus extérieure de la deuxième couche de caoutchouc (7) dans la direction radiale du pneu.

**14.** Pneu de la revendication 12 ou 13,

dans lequel une proportion (t2/t1) d'une épaisseur t2 de la seconde couche de caoutchouc (7) par rapport à une épaisseur t1 de la première couche de caoutchouc (6) est comprise entre 5/95 et 60/40.

FIG. 1

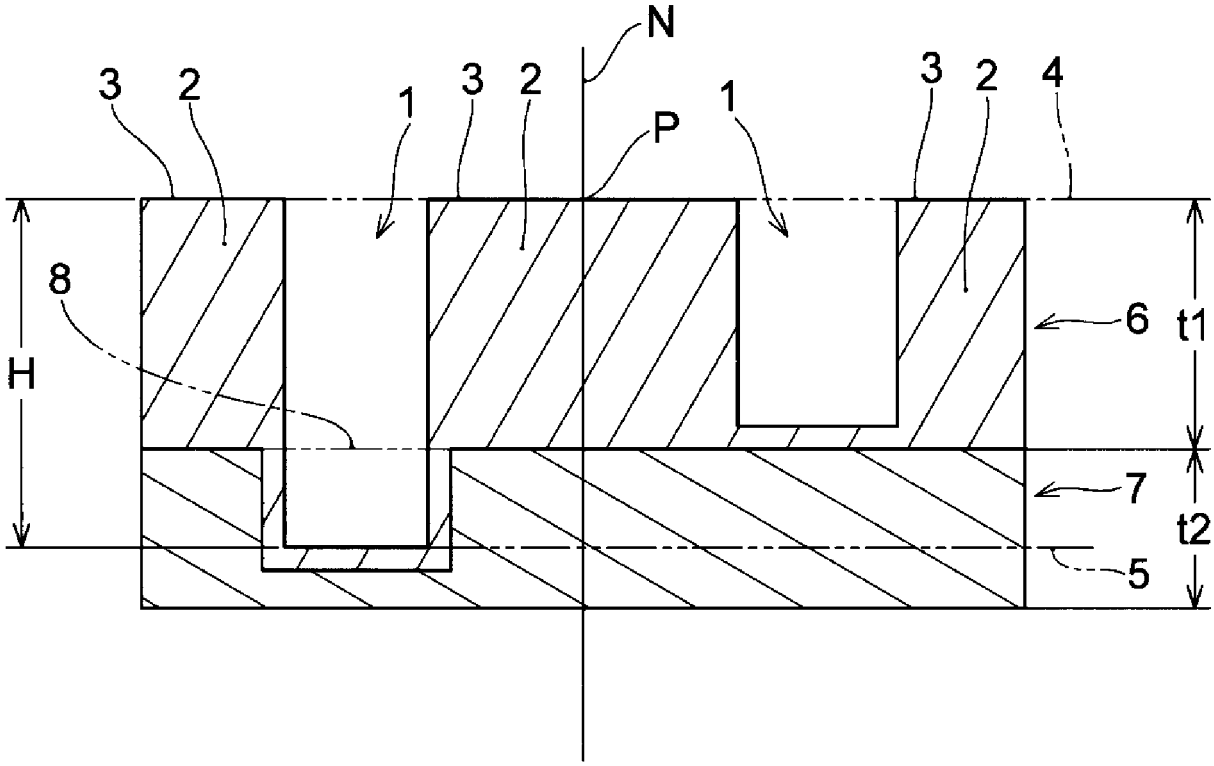

FIG.2

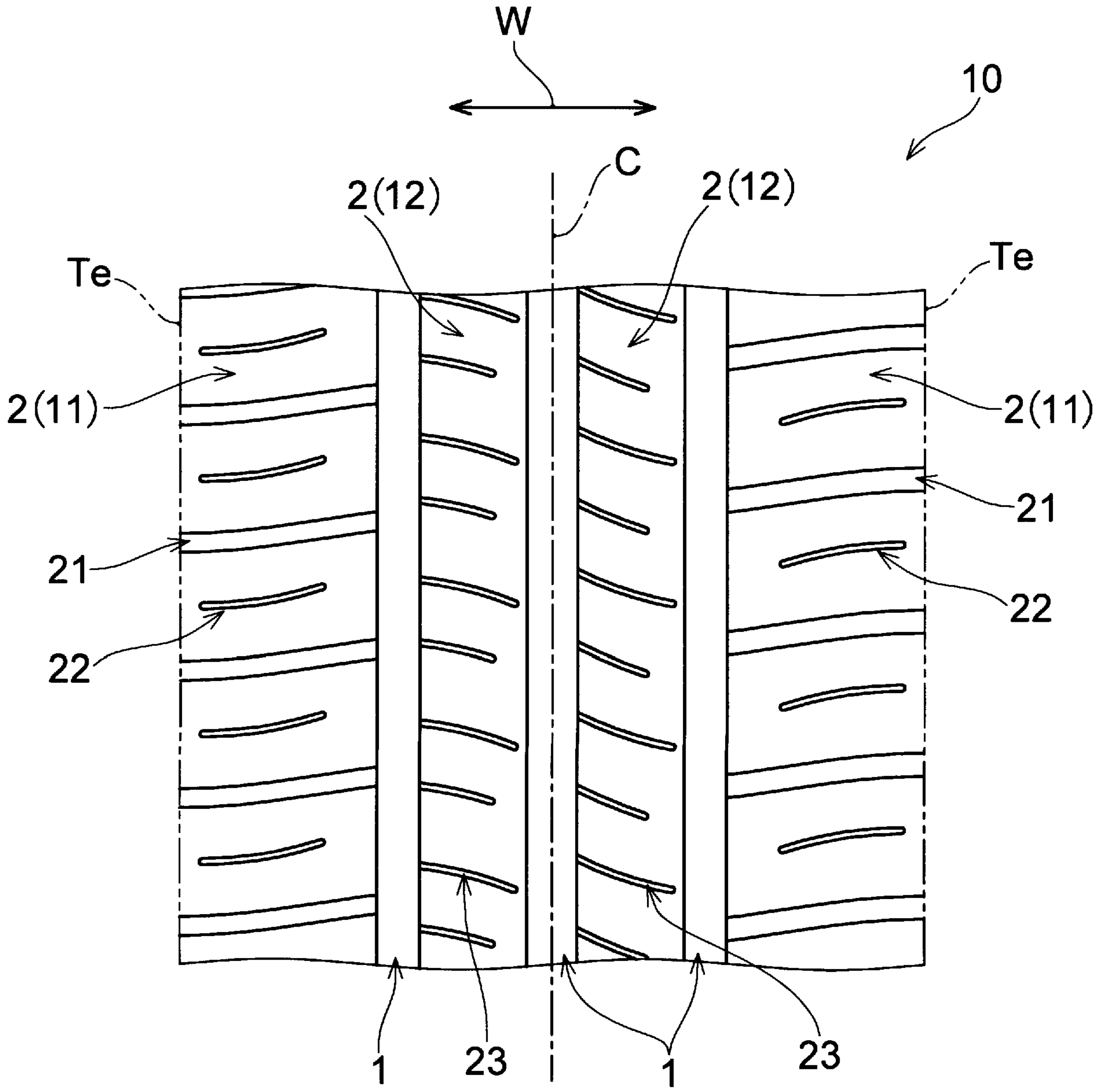

FIG. 3

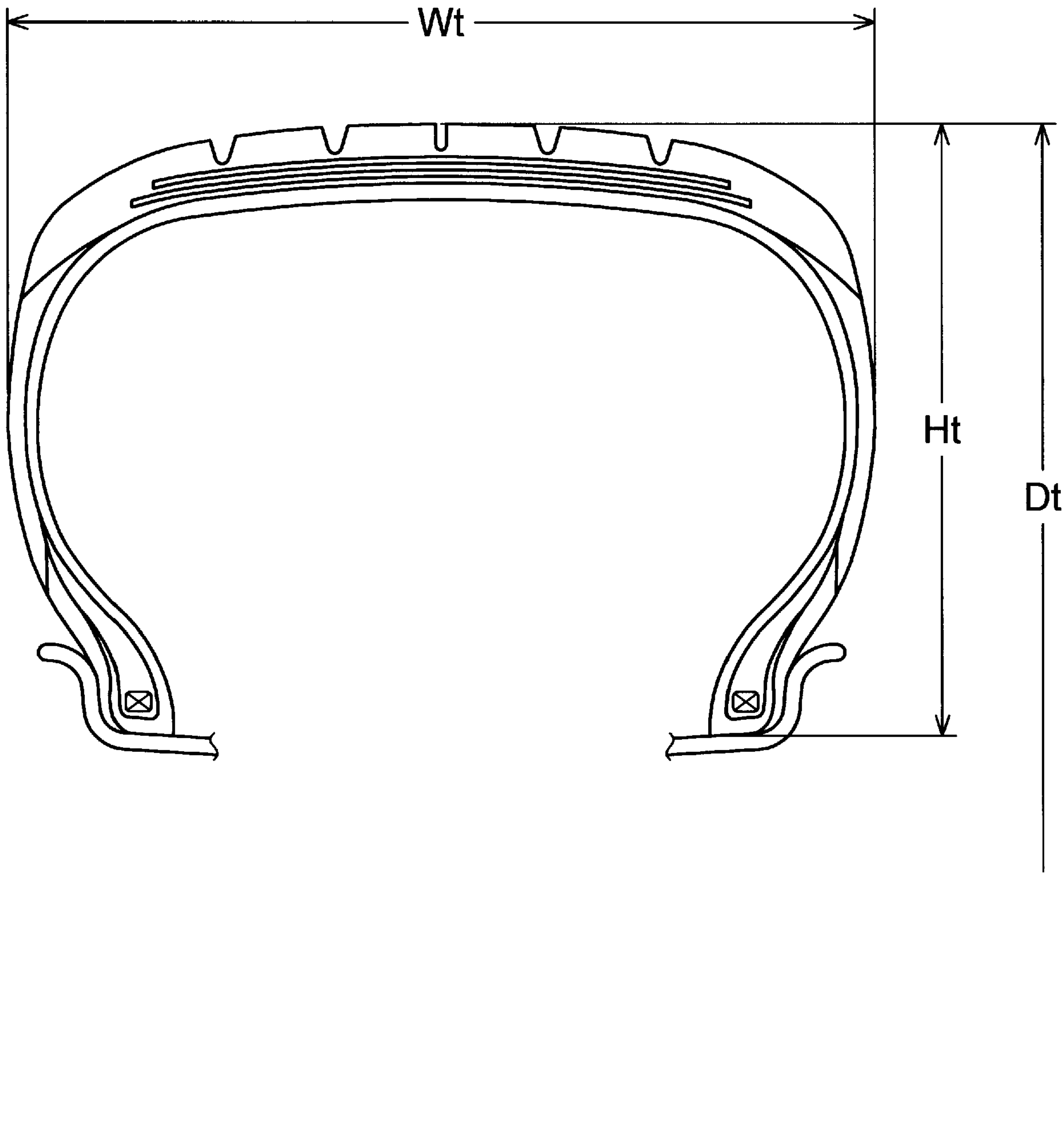

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017043281 A